Europäisches Patentamt

European Patent Office

Office européen des brevets

(19)

(11) **EP 1 272 842 B1**

(12) **EUROPÄISCHE PATENTSCHRIFT**

(45) Veröffentlichungstag und Bekanntmachung des Hinweises auf die Patenterteilung:
**09.06.2004 Patentblatt 2004/24**

(51) Int Cl.$^7$: **G01N 33/487**, C12Q 1/68, G01N 27/22, G01N 27/403, G01N 27/30, G01N 27/49

(21) Anmeldenummer: **01929289.5**

(22) Anmeldetag: **29.03.2001**

(86) Internationale Anmeldenummer:
**PCT/DE2001/001243**

(87) Internationale Veröffentlichungsnummer:
**WO 2001/075437 (11.10.2001 Gazette 2001/41)**

(54) **BIOSENSOR UND VERFAHREN ZUM ERMITTELN MAKROMOLEKULARER BIOPOLYMERE MIT EINEM BIOSENSOR**

BIOSENSOR AND A METHOD FOR DETECTING MACROMOLECULAR BIOPOLYMERS HAVING A BIOSENSOR

BIODETECTEUR ET PROCEDE DE DETECTION DE BIOPOLYMERES MACROMOLECULAIRES AU MOYEN D'UN BIODETECTEUR

(84) Benannte Vertragsstaaten:
**AT BE CH CY DE DK ES FI FR GB GR IE IT LI LU MC NL PT SE TR**

(30) Priorität: **30.03.2000 DE 10015818**

(43) Veröffentlichungstag der Anmeldung:
**08.01.2003 Patentblatt 2003/02**

(73) Patentinhaber: **Infineon Technologies AG**
**81669 München (DE)**

(72) Erfinder:
• **FREY, Alexander**
**82024 Taufkirchen (DE)**

• **THEWES, Roland**
**82194 Gröbenzell (DE)**

(74) Vertreter: **Viering, Jentschura & Partner**
**Steinsdorfstrasse 6**
**80538 München (DE)**

(56) Entgegenhaltungen:
**WO-A-93/22678        WO-A-95/12808**
**WO-A-98/29739        WO-A-99/42558**
**WO-A-99/67628        DE-A- 19 610 115**
**US-A- 5 865 972**

**Beschreibung**

Ein solcher Biosensorchip ist aus [1] bekannt.

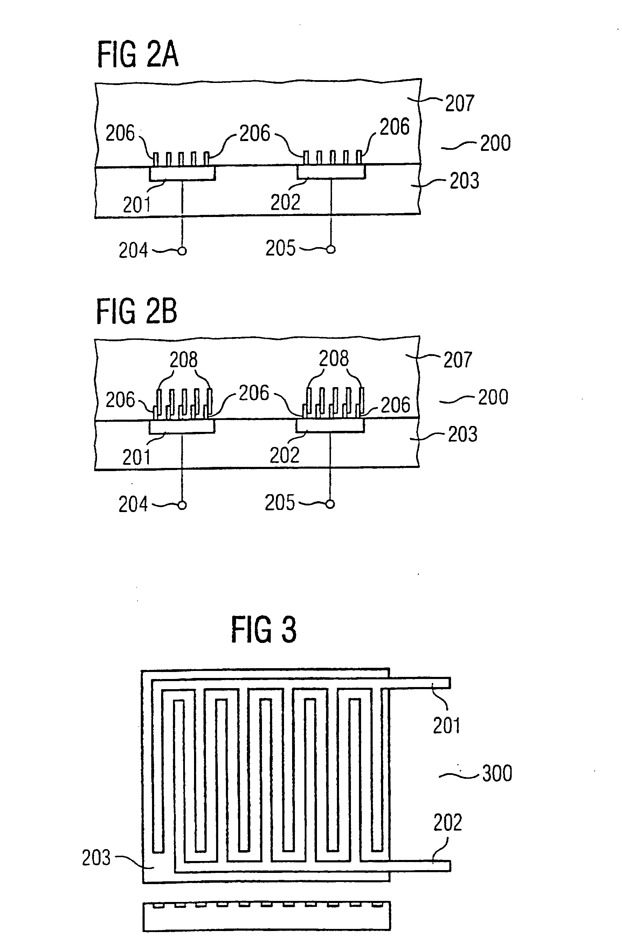

**Fig.2a** und **Fig.2b** zeigen einen solchen Biosensorchip, wie er in [1] beschrieben ist. Der Sensor 200 weist zwei Elektroden 201, 202 aus Gold auf, die in einer Isolatorschicht 203 aus Isolatormaterial eingebettet sind. An die Elektroden 201, 202 sind Elektroden-Anschlüsse 204, 205 angeschlossen, an denen das an der Elektrode 201, 202 anliegende elektrische Potential zugeführt werden kann. Die Elektroden 201, 202 sind als Planarelektroden angeordnet. Auf jeder Elektrode 201, 202 sind DNA-Sondenmoleküle 206 immobilisiert (vgl. **Fig.2a**). Die Immobilisierung erfolgt gemäß der Gold-Schwefel-Kopplung. Auf den Elektroden 201, 202 ist das zu untersuchende Analyt, beispielsweise ein Elektrolyt 207, aufgebracht.

Sind in dem Elektrolyt 207 DNA-Stränge 208 mit einer Sequenz enthalten, die zu der Sequenz der DNA-Sondenmoleküle 206 komplementär ist, so hybridisieren diese DNA-Stränge 208 mit den DNA-Sondenmolekülen 206 (vgl. **Fig.2b**).

Eine Hybridisierung eines DNA-Sondenmoleküls 206 und eines DNA-Strangs 208 findet nur dann statt, wenn die Sequenzen des jeweiligen DNA-Sondenmoleküls 206 und des entsprechenden DNA-Strangs 208 zueinander komplementär sind. Ist dies nicht der Fall, so findet keine Hybridisierung statt. Somit ist ein DNA-Sondenmolekül einer vorgegebenen Sequenz jeweils nur in der Lage einen bestimmten, nämlich den DNA-Strang mit jeweils komplementärer Sequenz zu binden, d.h. mit ihm zu hybridisieren.

Findet eine Hybridisierung statt, so verändert sich, wie aus **Fig.2b** ersichtlich, der Wert der Impedanz zwischen den Elektroden 201 und 202. Diese veränderte Impedanz wird durch Anlegen einer Wechselspannung mit einer Amplitude von ungefähr 50 mV an die Elektroden-Anschlüsse 204, 205 und dem dadurch resultierenden Strom mittels eines angeschlossenen Messgeräts (nicht dargestellt) bestimmt.

Im Falle einer Hybridisierung verringert sich der kapazitive Anteil der Impedanz zwischen den Elektroden 201, 202. Dies ist darauf zurückzuführen, dass sowohl die DNA-Sondenmoleküle 206 als auch die DNA-Stränge 208, die eventuell mit den DNA-Sondenmolekülen 206 hybridisieren, nicht-leitend sind und somit anschaulich die jeweilige Elektrode 201, 202 in gewissem Maße elektrisch abschirmen.

Zur Verbesserung der Messgenauigkeit ist es aus [4] bekannt, eine Vielzahl von Elektrodenpaaren 201, 202 zu verwenden und diese parallel zu schalten, wobei diese anschaulich miteinander verzahnt angeordnet sind, so dass sich eine sogenannte Interdigitalelektrode 300 ergibt. Die Abmessung der Elektroden und der Abstände zwischen den Elektroden liegen in der Größenordnung der Länge der zu detektierenden Moleküle, d.h. der DNA-Stränge 208 oder darunter, beispielsweise im Bereich von 200 nm und darunter.

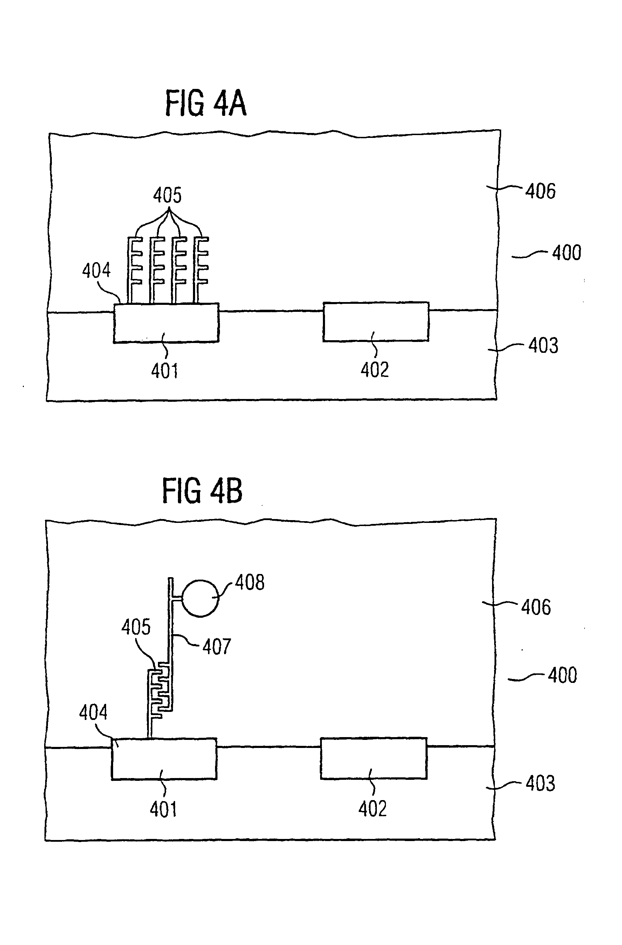

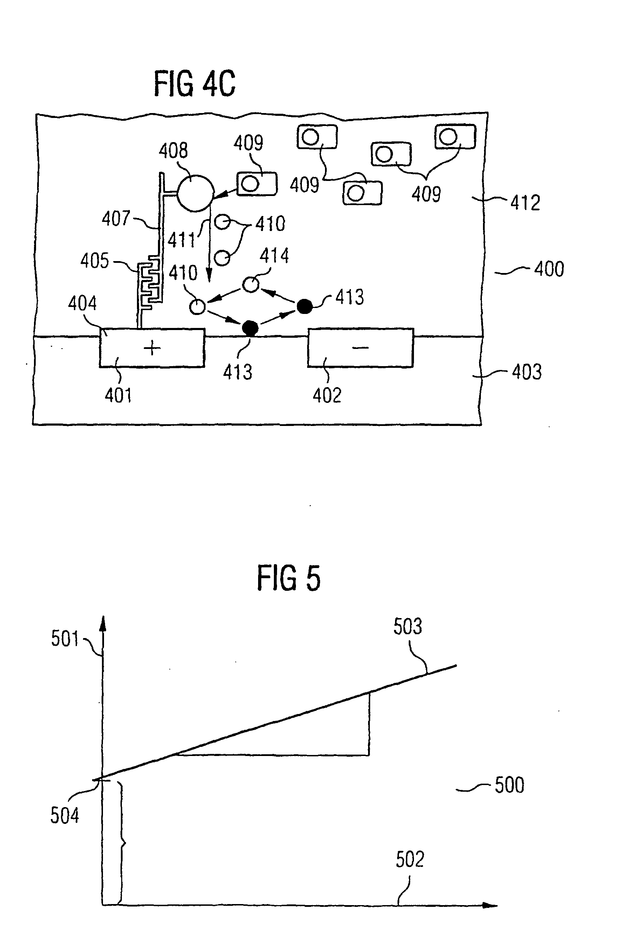

Weiterhin sind Grundlagen über einen Reduktions-/Oxidations-Recycling-Vorgang zum Erfassen makromolekularer Biopolymere aus [2] und [3] bekannt. Das Reduktions-/Oxidations-Recycling-Vorgang, im weiteren auch als Redox-Recycling-Vorgang bezeichnet, wird im weiteren anhand der **Fig.4a** bis **Fig.4c** näher erläutert.

**Fig.4a** zeigt einen Biosensorchip 400 mit einer ersten Elektrode 401 und einer zweiten Elektrode 402, die auf einem Substrat 403 als Isolatorschicht aufgebracht sind.

Auf der ersten Elektrode 401 aus Gold ist ein Haltebereich, ausgestaltet als Halteschicht 404, aufgebracht. Der Haltebereich dient zum Immobilisieren von DNA-Sondenmolekülen 405 auf der ersten Elektrode 401.

Auf der zweiten Elektrode ist kein solcher Haltebereich vorgesehen.

Sollen mittels des Biosensors 400 DNA-Stränge mit einer Sequenz, die komplementär ist zu der Sequenz der immobilisierten DNA-Sondenmoleküle 405 erfasst werden, so wird der Sensor 400 mit einer zu untersuchenden Lösung 406, beispielsweise einem Elektrolyt, in Kontakt gebracht derart, dass in der zu untersuchenden Lösung 406 eventuell enthaltene DNA-Stränge mit der komplementären Sequenz zu der Sequenz der DNA-Sondenmoleküle 405 hybridisieren können.

**Fig.4b** zeigt den Fall, dass in der zu untersuchenden Lösung 406 die zu erfassenden DNA-Stränge 407 enthalten sind und mit die DNA-Sondenmoleküle 405 hybridisiert sind.

Die DNA-Stränge 407 in der zu untersuchenden Lösung sind mit einem Enzym 408 markiert, mit dem es möglich ist, im weiteren beschriebene Moleküle in Teilmoleküle zu spalten.

Üblicherweise ist eine erheblich größere Anzahl von DNA-Sondenmolekülen 405 vorgesehen, als zu ermittelnde DNA-Stränge 407 in der zu untersuchenden Lösung 406 enthalten sind.

Nachdem die in der zu untersuchenden Lösung 406 eventuell enthaltenen, mit dem Enzym 408 mit den immobilisierten DNA-Sondenmolekülen 407 hybridisiert sind, erfolgt eine Spülung des Biosensorchips 400, wodurch die nicht hybridisierten DNA-Stränge entfernt werden und der Biosensorchip 400 von der zu untersuchenden Lösung 406 gereinigt wird.

Dieser zur Spülung verwendeten Spüllösung oder einer in einer weiteren Phase eigens zugeführten weiteren Lösung wird eine elektrisch ungeladene Substanz beigegeben, die Moleküle enthält, die durch das Enzym an den hybridisierten DNA-Strängen 407 gestalten werden können in ein erstes Teilmolekül 410 mit einer negativen elektrischen Ladung und in ein zweites Teilmolekul mit einer positiven elektrischen Ladung.

Die negativ geladenen ersten Teilmoleküle 410 werden, wie in **Fig.4c** gezeigt ist, zu der positiv geladenen Anode gezogen, d.h. zu der ersten Elektrode 401, wie durch den Pfeil 411 in **Fig.4c** angedeutet ist.

Die negativ geladenen ersten Teilmoleküle 410 werden an der ersten Elektrode 401, die als Anode ein positives elektrisches Potential aufweist, oxidiert und werden als oxidierte Teilmoleküle 413 an die negativ geladene Katode, d.h. die zweite Elektrode 402 gezogen, wo sie wieder reduziert werden. Die reduzierten Teilmoleküle 414 wiederum wandern zu der ersten Elektrode 401, d.h. zu der Anode.

Auf diese Weise wird ein elektrischer Kreisstrom generiert, der proportional ist zu der Anzahl der jeweils durch die Enzyme 408 erzeugten Ladungsträger.

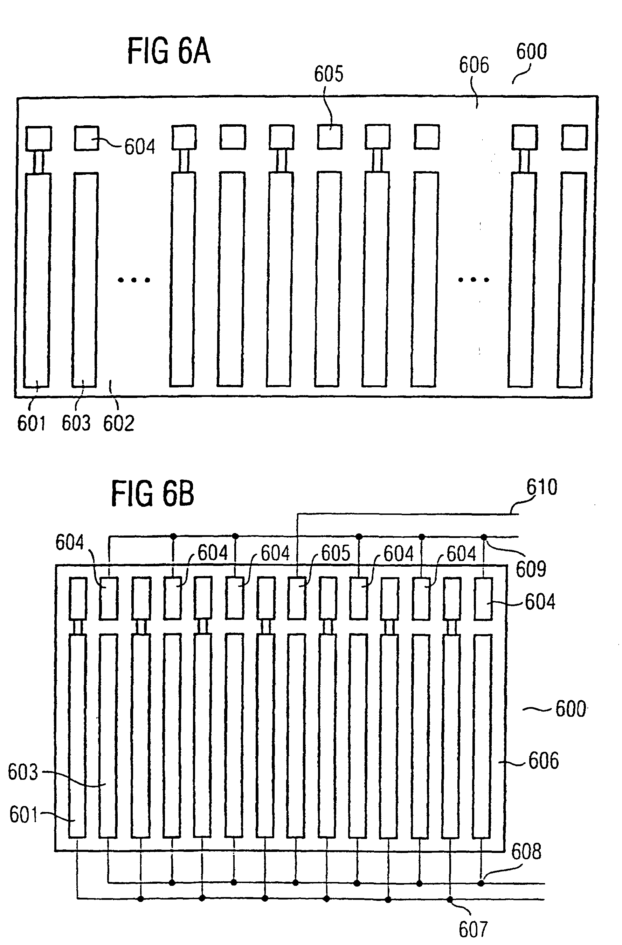

Der elektrische Parameter, der bei dieser Methode ausgewertet wird, ist die Änderung des elektrischen Stroms $\frac{dI}{dt}$ als Funktion der Zeit t, wie dies in dem Diagramm 500 in **Fig.5** schematisch dargestellt ist.

**Fig.5** zeigt die Funktion des elektrischen Stroms 501 abhängig von der Zeit 502. Der sich ergebende Kurvenverlauf 503 weist einen Offsetstrom $I_{offset}$ 504 auf, der unabhängig ist vom zeitlichen Verlauf.

Der Offsetstrom $I_{offset}$ 504 wird erzeugt durch parasitäre Anteile aufgrund von Nichtidealitäten des Biosensors 400.

Eine wesentliche Ursache für den Offsetstrom $I_{offset}$ 504 liegt darin, dass die Bedeckung der ersten Elektrode 401 mit DNA-Sondenmolekülen 405 nicht ideal, d.h. nicht vollständig dicht erfolgt.

Im Falle einer vollständig dichten Bedeckung der ersten Elektrode 401 mit DNA-Sondenmolekülen 405 ergäbe sich aufgrund der sogenannten Doppelschichtkapazität, die durch die immobilisierten DNA-Sondenmoleküle 405 entsteht, zwischen der ersten Elektrode 401 und der elektrisch leitenden zu untersuchenden Lösung 406 nur eine rein kapazitive elektrische Kopplung.

Die nicht vollständige Bedeckung führt jedoch zu parasitären Strompfaden zwischen der ersten Elektrode 401 und der zu untersuchenden Lösung 406, die unter anderem auch ohmsche Anteile aufweisen.

Um jedoch den Oxidations-/Reduktions-Prozess zu ermöglichen, darf die Bedeckung der ersten Elektrode 401 mit dem DNA-Sondenmolekülen 405 nicht vollständig sein, damit die elektrisch geladenen Teilmoleküle, d.h. die negativ geladenen ersten Teilmoleküle zu der ersten Elektrode 401 überhaupt angezogen werden.

Um andererseits eine möglichst große Sensitivität eines solchen Biosensors zu erreichen, verbunden mit geringen parasitären Effekten, sollte die Bedeckung der ersten Elektrode 401 mit DNA-Sondenmolekülen 405 möglichst dicht sein.

Um eine hohe Reproduzierbarkeit der mit einem solchen Biosensor 400 bestimmten Messwerte zu erreichen, müssen beide Elektroden 401, 402 stets ein hinreichend großes Flächenangebot für den Oxidations-/Reduktions-Prozess im Rahmen des Redox-Recycling-Vorgangs bereitstellen.

Bei dem Biosensor gemäß dem Stand der Technik, ergibt sich somit eine gewisse Messunsicherheit beim Ermitteln der DNA-Stränge in einer zu untersuchenden Lösung.

Unter makromolekularen Biopolymeren sind beispielsweise Proteine oder Peptide oder auch DNA-Stränge einer jeweils vorgegebenen Sequenz zu verstehen.

Sollen als makromolekulare Biopolymere Proteine oder Peptide erfasst werden, so sind die ersten Moleküle und die zweiten Moleküle Liganden, beispielsweise Wirkstoffe mit einer möglichen Bindungsaktivität, die die zu erfassenden Proteine oder Peptide an die jeweilige Elektrode binden, auf der die entsprechenden Liganden angeordnet sind.

Als Liganden kommen Enzymagonisten oder Enzymantagonisten, Pharmazeutika, Zucker oder Antikörper oder irgendein Molekül in Betracht, das die Fähigkeit besitzt, Proteine oder Peptide spezifisch zu binden.

Werden als makromolekulare Biopolymere DNA-Stränge einer vorgegebenen Sequenz verwendet, die mittels des Biosensors erfasst werden sollen, so können mittels des Biosensors DNA-Stränge einer vorgegebenen Sequenz mit DNA-Sondenmolekülen mit der zu der Sequenz der DNA-Strände komplementären Sequenz als Moleküle auf der ersten Elektrode hybridisiert werden.

Im Rahmen dieser Beschreibung ist unter einem Sondenmolekül sowohl ein Ligand als auch ein DNA-Sondenmolekül zu verstehen.

Der Wert $\frac{dI}{dt}$ ist proportional zur Elektrodenfläche der zur Erfassung des Messstroms verwendeten Elektroden. Bei gleichbleibender Breite der Elektroden ist somit der Wert $\frac{dI}{dt}$ proportional zur Längsausdehnung der verwendeten Elektroden, beispielsweise bei der ersten Elektrode 201 und der zweiten Elektrode 202 deren Länge senkrecht zur Zeichenebene in **Fig.2a** und **Fig.2b**.

Sind mehrere Elektroden parallel geschaltet, beispielsweise in der bekannten Interdigitalelektrodenanordnung, so ist die Änderung des Messstroms $\frac{dI}{dt}$ ferner proportional zur Anzahl der jeweils parallel geschalteten Elektroden.

Der Wert der Änderung des Messstroms $\frac{dI}{dt}$ kann jedoch aufgrund unterschiedlicher Einflüsse einen sehr stark schwankenden Wertebereich aufweisen, insbesondere für unterschiedliche zu untersuchende Lösungen.

Ursache für die starken Schwankungen kann zum einen der für nachzuweisende DNA-Stränge einer vorgegebenen Sequenz geforderte Dynamikbereich sein, um deren Erfassung überhaupt zu ermöglichen.

Zum anderen ist es jedoch auch möglich, dass unterschiedliche nachzuweisende makromolekulare Biopolymere unterschiedlicher Typen zu stark unterschiedlichen Wertebereichen für das sich ergebende Messsignal, d.h.

insbesondere den Messstrom und dessen zeitliche Änderung $\frac{dI}{dt}$ führen, was wiederum zu einer

Ausweitung des erforderlichen gesamten Dynamikbereichs für eine vorgegebene Elektrodenkonfiguration mit nachfolgender einheitlicher Messelektronik, d.h. mit nachfolgender einheitlicher Messschaltung führt.

Die Messelektronik, die die zeitliche Veränderung zwischen den Elektroden, d.h. zwischen Anode und Katode erfasst und weiterverarbeitet, muss in den geforderten Wertebereichen verlässlich und genau funktionieren. Die Anforderungen an den großen Dynamikbereich einer solchen Schaltung führen dazu, dass die Messelektronik teuer und kompliziert ausgestaltet ist, um den erforderlichen Dynamikbereich bereitzustellen.

Auch bei anderen Verfahren, wie sie beispielsweise aus [4], [5], [6], [7], [8] bekannt sind, kann der Fall auftreten, dass die zu detektierenden elektrischen Messsignale über einen großen Dynamikbereich messbar sein müssen.

Auch dort können sich extreme Anforderungen an die Messelektronik, d.h. die Auswerteschaltung bezüglich ihrer Dynamik ergeben. Insbesondere beim Schaltungsentwurf werden die Nicht-Idealitäten der verwendeten Bauelemente, d.h. ein Rauschen, die Variation der Parameter der Bauelemente, in der Form berücksichtigt, dass für diese Bauelemente in der entworfenen Schaltung ein Arbeitspunkt gewählt wird, in dem diese Nicht-Idealitäten einen möglichst geringen Einfluss auf die Qualität des Messergebnisses haben. Sofern eine Schaltung über einen großen Dynamikbereich betrieben werden soll, wird die Einhaltung eines optimalen Arbeitspunktes für alle Bereiche zunehmend schwieriger und aufwendiger.

Somit liegt der Erfindung das Problem zugrunde, einen Biosensor anzugeben, bei dem für eine nachgeschaltete Messelektronik geringere Anforderungen zum Erfassen auch stark in ihrem wert schwankender Messsignale ermöglicht wird.

Das Problem wird durch den Biosensor sowie durch das Verfahren zum Ermitteln makromolekularer Biopolymere mit einem Biosensor mit den Merkmalen gemäß den unabhängigen Patentansprüchen gelöst.

Ein Biosensor weist eine erste Elektrode auf, die einen Haltebereich zum Halten von Sondenmolekülen aufweist, die makromolekulare Biopolymere binden können. Weiterhin weist der Biosensor eine zweite Elektrode auf. Die erste Elektrode und/oder die zweite Elektrode sind in eine Mehrzahl voneinander elektrisch isolierter Elektrodensegmente unterteilt, wobei beliebig ausgewählte Elektrodensegmente unabhängig voneinander elektrisch koppelbar sind, so dass eine effektive Elektrodenfläche in ihrer Größe abhängig von den ausgewählten Elektrodensegmenten einstellbar ist.

Unter makromolekularen Biopolymeren sind beispielsweise Proteine oder Peptide oder auch DNA-Stränge einer jeweils vorgegebenen Sequenz zu verstehen.

Sollen als makromolekulare Biopolymere Proteine oder Peptide erfasst werden, so sind die ersten Moleküle und die zweiten Moleküle Liganden, beispielsweise Wirkstoffe mit einer möglichen Bindungsaktivität, die die zu erfassenden Proteine oder Peptide an die jeweilige Elektrode binden, auf der die entsprechenden Liganden angeordnet sind.

Als Liganden kommen Enzymagonisten oder Enzymantagonisten, Pharmazeutika, Zucker oder Antikörper oder irgendein Molekül in Betracht, das die Fähigkeit besitzt, Proteine oder Peptide spezifisch zu binden.

Werden als makromolekulare Biopolymere DNA-Stränge einer vorgegebenen Sequenz verwendet, die mittels des Biosensors erfasst werden sollen, so können mittels des Biosensors DNA-Stränge einer vorgegebenen Sequenz mit DNA-Sondenmolekülen mit der zu der Sequenz der DNA-Stränge komplementären Sequenz als Moleküle auf der ersten Elektrode hybridisiert werden.

Im Rahmen dieser Beschreibung ist unter einem Sondenmolekül sowohl ein Ligand als auch ein DNA-Sondenmolekül zu verstehen.

Ein solcher Sensor wird im Rahmen eines Verfahrens zum Ermitteln makromolekularer Biopolymere eingesetzt.

Bei diesem Verfahren wird eine zu untersuchende Lösung mit dem Biosensor in Kontakt gebracht, wobei die Lösung die zu erfassenden makromolekularen Biopolymere enthalten kann. In der zu untersuchenden Lösung enthaltene makromolekulare Biopolymere werden an auf der ersten Elektrode immobilisierte Sondenmoleküle gebunden, wobei die gebundenen makromolekularen Biopolymere mit einem Enzym markiert sind.

Der Biosensor wird mit einer Spüllösung gespült, so dass die zu untersuchende Lösung sowie eventuell nicht hybridisierte, d.h. nicht gebundene makromolekulare Biopolymere von dem Biosensor, d.h. insbesondere von den Elektroden, entfernt werden.

Eine weitere Lösung mit durch das Enzym spaltbaren Molekülen wird mit dem Biosensor in Kontakt gebracht. Jeweils ein spaltbares Molekül wird mittels des Enzyms in ein erstes Teilmolekül einer ersten Ladung und in ein zweites Teilmolekül einer zweiten Ladung aufgespaltet. Das erste Teilmolekül wird an einer der Elektroden oxidiert oder reduziert und an der jeweils anderen Elektrode entsprechend reduziert oder oxidiert, wodurch ein Messstrom erzeugt wird.

Der Messstrom ist der oben beschriebene gemäß dem Stand der Technik bekannte Kreisstrom im Rahmen des Reduktions/Oxidations-Recycling-Vorgangs.

Abhängig von dem Messstrom werden Elektrodensegmente ausgewählt und elektrisch miteinander gekoppelt, so dass die effektive Elektrodenfläche des Biosensors in ihrer Größe abhängig von den ausgewählten Elektrodensegmenten eingestellt wird. Abhängig von dem ermittelten Messstrom werden die makromolekularen Biopolymere ermittelt.

In anderen Worten bedeutet dies, dass sowohl ermittelt werden kann, ob überhaupt die zu erfassenden makromolekularen Biopolymere in der zu untersuchenden Lösung enthalten waren. Es ist sogar aufgrund der Genauigkeit des Messverfahrens möglich, eine Aussage über die Anzahl der gebundenen makromolekularen Biopolymere in der zu untersuchenden Lösung, die mit den Sondenmolekülen gebunden wurden, zu treffen.

Dies ist möglich, da für den Fall, dass viele mit dem Enzym markierten DNA-Stränge mit immobilisierten DNA-Sondenmolekülen in einem vorgegebenen Bereich der ersten Elektrode hybridisieren, entsprechend viele dieser Enzyme an diesen Bereich konzentriert sind und die Anstiegsrate des erzeugten Kreisstroms höher ist als in einem Bereich, wo weniger mit dem aktiven Enzym markierte DNA-Stränge hybridisiert sind.

Durch Vergleichen der Anstiegsraten zwischen verschiedenen Bereichen von Elektroden eines Biosensors kann auf diese Weise ermittelt werden, nicht nur ob DNA-Stränge in der zu untersuchenden Lösung mit den DNA-Sondenmolekülen einer vorgegebenen Sequenz hybridisieren, sondern auch wie gut, d.h. mit welcher Effizienz gegenüber anderen DNA-Sondenmolekülen diese Hybridisierung erfolgt.

Mit anderen Worten kann mittels des Biosensors sowohl eine qualitative als auch eine quantitative Information über den DNA-Inhalt, allgemein über den Inhalt makromolekularer Biopolymere in der zu untersuchenden Lösung ermittelt werden.

In dem Biosensor können elektrische Schalter enthalten sein, von denen jeweils ein Schalter mit einem zugeordneten Elektrodensegment gekoppelt ist derart, dass in einer ersten Schalterposition eines Schalters das zugehörige Elektrodensegment ausgewählt ist und das Elektrodensegment mit einem Sammelanschluss elektrisch gekoppelt ist. In einer zweiten Schalterposition ist das zugehörige Elektrodensegment nicht ausgewählt. In diesem Fall ist das zugehörige Elektrodensegment mit einem vorgegebenen elektrischen Potential gekoppelt.

Mit dem Biosensor kann eine Messelektronik zum Messen eines von den ausgewählten Elektrodensegmenten zur Verfügung gestellten elektrischen Signals gekoppelt sein, wobei der Eingang der Messelektronik mit den ausgewählten Elektrodensegmenten elektrisch gekoppelt ist. Die Messelektronik kann auf dem gleichen Chip wie die Elektroden des Biosensors integriert sein oder auch außerhalb des Biosensors angeordnet sein.

Ferner kann eine mit der Messelektronik gekoppelte Schaltersteuerungseinheit zum Steuern der Schalter, allgemein zum Steuern der Auswahleinheiten, gekoppelt sein.

Die Schaltersteuereinheit ist gemäß einer Ausgestaltung der Erfindung derart eingerichtet, dass die Schalter abhängig von dem von der Messelektronik erfassten elektrischen Signal gesteuert werden können.

Die zweite Elektrode kann in eine Mehrzahl voneinander elektrisch isolierter Elektrodensegmente unterteilt sein, wobei die beliebig ausgewählten Elektrodensegmente der zweiten Elektrode unabhängig voneinander elektrisch koppelbar sind, so dass die effektive Elektrodenfläche in ihrer Größe abhängig von den ausgewählten Elektrodensegmenten einstellbar ist. Gemäß dieser Weiterbildung ist das nicht ausgewählte Elektrodensegment mit dem vorgegebenen elektrischen Potential derart gekoppelt, dass ein Reduktions-/Oxidations-Recycling-Vorgang an den Elektroden erfolgen kann.

Ferner kann in dem Biosensor eine dritte Elektrode vorgesehen sein, wobei die zweite Elektrode und die dritte Elektrode unterschiedlich zu der ersten Elektrode und derart ausgestaltet sind, dass der Reduktions-/Oxidationsprozess im Rahmen eines Reduktions-/Oxidations-Recycling-Vorgangs an der zweiten Elektrode und der dritten Elektrode erfolgt.

Dies kann beispielsweise dadurch gewährleistet werden, dass die erste Elektrode ein erstes elektrisches Potential, die zweite Elektrode ein zweites elektrisches Potential, und die dritte Elektrode ein drittes elektrisches Potential aufweist. Das dritte elektrische Potential wird derart gewählt, dass während des Reduktions-/Oxidations-Recycling-Vorgangs die Reduktion oder Oxidation im wesentlichen nur an der zweiten Elektrode und an der dritten Elektrode erfolgt.

Diese Wahl kann beispielsweise derart erfolgen, dass das dritte elektrische Potential größer gewählt wird als das erste elektrische Potential und dass das an die erste Elektrode angelegte erste elektrische Potential größer ist als das an die zweite Elektrode angelegte zweite elektrische Potential.

Der Haltebereich der ersten Elektrode kann mit einem Material beschichtet sein, das Sondenmoleküle immobilisieren kann.

Der Haltebereich der ersten Elektrode kann ferner zum Halten von Liganden ausgestaltet sein, mit denen Peptide oder Proteine gebunden werden können.

Der Haltebereich der ersten Elektrode kann ferner zum Halten von DNA-Sondenmolekülen ausgestaltet sein, mit denen DNA-Moleküle gebunden werden können.

Der erste Haltebereich kann zumindest eines der folgenden Materialien enthalten:

- Hydroxylreste,
- Epoxidreste,
- Aminreste,

- Acetoxyreste,
- Isocyanatreste,
- Succinimidylesterreste,
- Thiolreste,
- Gold,
- Silber,
- Platin,
- Titan.

Als Enzym können beispielsweise

- a-Galactosidase,
- b-Galactosidase,
- b-Glucosidase,
- a-Mannosidase,
- Alkaline Phosphatase,
- Acidic Phosphatase,
- Oligosaccharide Dehydrogenase,
- Glucose Dehydrogenase,
- Laccase,
- Tyrosinase,
- oder artverwandte Enzyme

verwendet werden.

Es ist anzumerken, dass niedermolekulare Enzyme die höchste Umsatzeffizienz und daher auch die höchste Empfindlichkeit gewährleisten können.

In der weiteren Lösung sind somit Moleküle enthalten, die durch das Enzym gespalten werden können in ein erstes Teilmolekül mit negativer elektrischer Ladung und in ein zweites Teilmolekül mit positiver elektrischer Ladung.

Als das spaltbare Molekül können vor allem beispielsweise

- p-Aminophenyl-hexopyranoside,
- p-Aminophenyl-phosphate,
- p-Nitrophenyl-hexopyranoside,
- p-Nitrophenyl-phosphate, oder
- geeignete Derivate von

    a) Diaminen,
    b) Catecholaminen,
    c) $Fe(CN)_6^{4-}$,
    d) Ferrocen,
    e) Dicarboxylsäure,
    f) Ferrocenlysin,
    g) Osmiumbipyridyl-NH, oder
    h) PEG-Ferrocen2

verwendet werden.

Ein Ausführungsbeispiel der Erfindung ist in den Figuren dargestellt und wird im weiteren näher erläutert.

Es zeigen

Figuren 1a bis 1c    eine Darstellung verschiedener Elektrodenanordnungen in Draufsicht, wobei Figur 1A eine Skizze einer Elektrodenanordnung gemäß einem ersten Ausführungsbeispiel der Erfindung, Figur 1b eine Elektrodenanordnung gemäß einem zweiten Ausführungsbeispiel der Erfindung und Figur 1c eine Interdigitalelektrodenanordnung gemäß einem Ausführungsbeispiel der Erfindung darstellt.

Figuren 2a und 2b    eine Skizze zweier Planarelektroden, mittels derer die Existenz zu erfassender DNA-Stränge in einem Elektrolyt (Figur 2a) bzw. deren Nichtexistenz (Figur 2b) nachgewiesen werden können;

| | |
|---|---|
| Figur 3 | Interdigitalelektroden gemäß dem Stand der Technik. |
| Figuren 4a bis 4c | Skizzen eines Biosensors gemäß dem Stand der Technik, anhand derer einzelne Zustände im Rahmen des Redox-Recycling-Vorgangs erläutert werden; |
| Figur 5 | ein Funktionsverlauf eines Kreisstroms gemäß dem Stand der Technik im Rahmen eines Redox-RecyclingVorgangs; |
| Figuren 6a und 6b | eine Skizze einer weiteren Elektrodenanordnung gemäß einem weiteren Ausführungsbeispiel der Erfindung; |
| Figur 7 | einen Biosensor mit Schaltern und mit den Schaltern gekoppelter Messelektronik gemäß einem Ausführungsbeispiel der Erfindung; |
| Figuren 8a und 8b | eine Skizze eines Biosensors mit einer Messelektronik und einer mit der Messelektronik gekoppelten Schalterauswahleinheit gemäß einem Ausführungsbeispiel der Erfindung (Figur 8a) und eines Auswahlelements der Schalterauswahleinheit (Figur 8b); |
| Figur 9 | einen Biosensor gemäß einem Ausführungsbeispiel der Erfindung; |
| Figur 10 | einen Querschnitt eines Biosensors mit zwei Elektroden, die als Interdigitalelektrodenanordnung angeordnet sind; |
| Figuren 11a bis 11d | Querschnittsansichten einer Interdigitalelektrode in vier Verfahrenszuständen in einem Herstellungsverfahren eines Biosensors gemäß einem Ausführungsbeispiel der Erfindung; |
| Figuren 12a bis 12c | Querschnittsansichten eines Biosensors während einzelner Verfahrensschritte des Herstellungsverfahrens einer Elektrode des Biosensors gemäß einem weiteren Ausführungsbeispiel der Erfindung; |
| Figuren 13a bis 13c | Querschnittsansichten eines Biosensors während einzelner Verfahrensschritte des Herstellungsverfahrens einer Elektrode des Biosensors gemäß einem weiteren Ausführungsbeispiel der Erfindung; |
| Figuren 14a bis 14c | jeweils einen Querschnitt eines Biosensors zu verschiedenen Zeitpunkten während des Herstellungsverfahrens gemäß einem weiteren Ausführungsbeispiel der Erfindung; |
| Figur 15 | eine Draufsicht eines Biosensor-Arrays gemäß einem Ausführungsbeispiel der Erfindung mit zylinderförmigen Elektroden; |
| Figur 16 | eine Draufsicht eines Biosensor-Arrays gemäß einem Ausführungsbeispiel der Erfindung mit quaderförmigen Elektroden; |
| Figur 17 | eine Querschnittsansicht eines Biosensors gemäß einem weiteren Ausführungsbeispiel der Erfindung; |
| Figur 18 | eine Querschnittsansicht eines Biosensors gemäß einem weiteren Ausführungsbeispiel der Erfindung; und |
| Figuren 19a bis 19g | Querschnittsansichten eines Biosensors während einzelner Verfahrensschritte eines Herstellungsverfahrens gemäß einem weiteren Ausführungsbeispiel der Erfindung; |

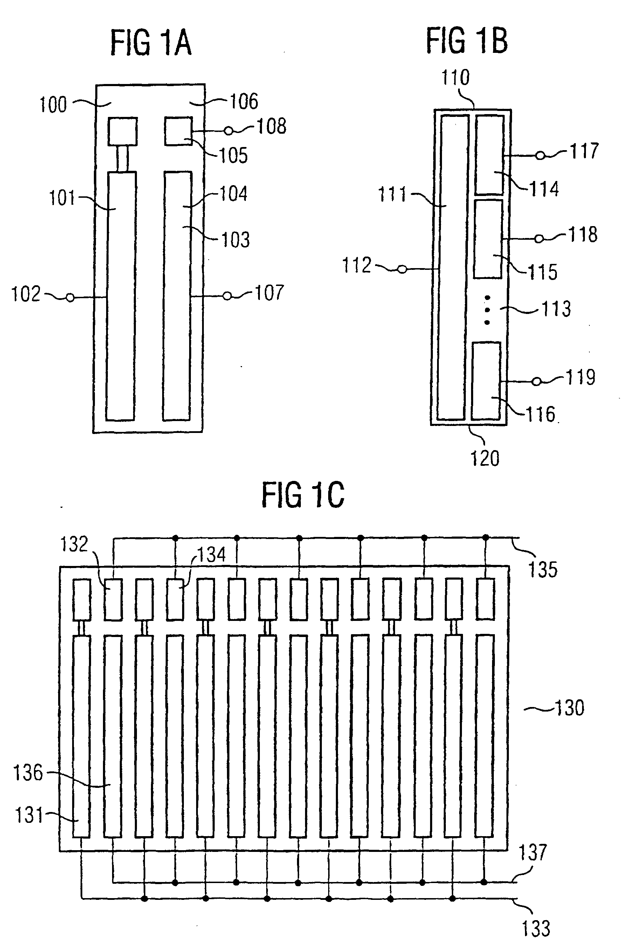

**Fig.1a** zeigt einen Biosensor 100 gemäß einem ersten Ausführungsbeispiel der Erfindung.

Der Biosensor 100 weist eine erste Elektrode 101 auf, die mit einem ersten elektrischen Anschluss 102 elektrisch gekoppelt ist.

Die zweite Elektrode 103 des Biosensors weist ein erstes Elektrodensegment 104 und ein zweites Elektrodensegment 105 auf.

Die erste Elektrode 101 sowie die zweite Elektrode 103 sind aus Gold hergestellt.

Die beiden Elektrodensegmente 104, 105 der zweiten Elektrode 103 sind elektrisch voneinander isoliert mittels einer Isolatorschicht 106, mittels der weiterhin die erste Elektrode 101 und die zweite Elektrode 103 voneinander elektrisch voneinander isoliert sind.

Das erste Elektrodensegment 104 ist mit einem zweiten elektrischen Anschluss 107 elektrisch gekoppelt und das zweite Elektrodensegment 105 der zweiten Elektrode 103 ist mit einem dritten elektrischen Anschluss 108 elektrisch gekoppelt.

Das erste Elektrodensegment 104 und das zweite Elektrodensegment 105 sind miteinander wahlweise elektrisch koppelbar oder voneinander elektrisch isolierbar.

Anschaulich wird die gesamte zweite Elektrode 103 allgemein in eine beliebige Anzahl von Elektrodensegmente 104, 105 aufgeteilt, wodurch die Elektrode in unabhängige, voneinander elektrisch isolierte Elektrodensegmente aufgeteilt wird.

Durch die unabhängige Auswahl und elektrische Kopplung der einzelnen Elektrodensegmente 104, 105 der zweiten Elektrode 103 kann die effektive Elektrodenfläche, die zur Erfassung des Messignals gewählt wird, in ihrer Größe sehr einfach und flexibel variiert und gesteuert werden.

Auf diese Weise wird es anschaulich möglich, beispielsweise in Abhängigkeit der Größe des Messstroms den gesamten Sensor, d.h. die gesamte zweite Elektrode 103 oder nur einen Teilbereich, d.h. ein oder mehrere Elektrodensegmente der zweiten Elektrode 103 mit der Messelektrode elektrisch zu koppeln.

Damit kann eine Anpassung der gesamten Schaltung zur Erfassung des Messstroms in den zur Verfügung stehenden Dynamikbereich der Messelektronik gewährleistet werden.

Insbesondere wird es möglich, allgemein eine Abbildung des Messbereichs auf einen verglichen mit dem Stand der Technik erheblichen kleineren Dynamikbereich der Schaltung zu gewährleisten, in dem die Schaltung gemäß vorgegebenen Kriterien optimiert arbeitet.

Aufgrund der oben dargelegten Proportionalität der Änderung des Messstroms über die Zeit zu der effektiven Elektrodenfläche ist somit ein variabler Abgriff des Messignals von der zweiten Elektrode 103 möglich.

**Fig.1b** zeigt eine verallgemeinerte Ausführungsform des in **Fig.1a** dargestellten Biosensors 100.

Bei dem in **Fig.1b** dargestellten Biosensor 110 sind zusätzlich zu der ersten Elektrode 111 mit einem ersten elektrischen Anschluss 112 n Elektrodensegmente einer zweiten Elektrode 113 vorgesehen.

Wiederum enthalten die erste Elektrode 111 sowie die zweite Elektrode 113 Gold.

Jedes der n Elektrodensegmente 114, 115, 116 ist mit einem elektrischen Anschluss 117, 118, 119 elektrisch gekoppelt. Die Elektrodensegmente 114, 115, 116 sind voneinander sowie von der ersten Elektrode 111 elektrisch mittels einer Isolatorschicht 120 isoliert.

Die elektrischen Anschlüsse 117, 118, 119 sind in beliebiger Weise frei auswählbar miteinander elektrisch koppelbar.

Entsprechend vorgebbarer Größen der einzelnen Elektrodensegmente 114, 115, 116 ist ein entsprechend der Elektrodenfläche der ausgewählten Elektrodensegmente proportionaler Messstrom zusammenführbar an einen im weiteren beschriebenen Sammelanschluss und somit einer Messelektronik zuführbar.

Gemäß dem Ausführungsbeispiel, welches in **Fig.1b** dargestellt ist, wurde ein Längenverhältnis der ersten Elektrode zu der Gesamtlänge aller Elektrodensegmente 114, 115, 116 der zweiten Elektrode 113 von 1 : 9 gewählt, d.h. gemäß diesem Ausführungsbeispiel weist die zweite Elektrode 113 neun Elektrodensegmente 114, 115, 116 auf (n = 9), wobei die Summe der Elektrodenfläche der Elektrodensegmente 114, 115, 116 der zweiten Elektrode 113 der Elektrodenfläche der erste Elektrode 111 entspricht.

Dies bedeutet, dass bei Zusammenschaltung aller Elektrodensegmente 114, 115, 116 der zweiten Elektrode 113 100% des generierten Messstroms, welcher gemäß dem in **Fig.4a** bis **Fig.4c** dargestellten Reduktions-/Oxidations-Recycling-Vorgang erzeugt wird, an eine Messelektronik zur Auswertung des Messstroms bzw. dessen zeitlicher Differentiation abgegriffen.

Die im weiteren beschriebene Ausgestaltung bezieht sich auf alle Ausführungsbeispiele der Erfindung.

Auf der ersten Elektrode sind Haltebereiche zum Immobilisieren von DNA-Sondenmolekülen vorgesehen. In den Haltebereichen sind DNA-Sondenmoleküle immobilisiert gemäß der Gold-Schwefel-Kopplung.

In einem ersten Schritt wird eine zu untersuchende Lösung, in der die zu erfassenden DNA-Stränge mit zu der Sequenz der DNA-Sondenmolekülen komplementärer Sequenz mit zumindest der erste Elektrode in Kontakt gebracht.

Sind in der zu untersuchenden Lösung DNA-Stränge mit zu der Sequenz der DNA-Sondenmolekülen komplementären Sequenz enthalten, so hybridisieren diese mit den DNA-Sondenmolekülen.

In einem weiteren Schritt wird eine Spüllösung auf den Biosensor, insbesondere auf die erste Elektrode, aufgebracht, wodurch die zu untersuchende Lösung sowie nicht hybridisierte DNA-Stränge, allgemein nicht gebundene makromolekulare Biopolymere von dem Biosensor, insbesondere von der ersten Elektrode entfernt werden.

Die DNA-Stränge sind mit einem Enzym markiert.

Als Enzym werden folgende Stoffe verwendet:

Als Enzym können beispielsweise

- a-Galactosidase,
- b-Galactosidase,
- b-Glucosidase,
- a-Mannosidase,
- Alkaline Phosphatase,
- Acidic Phosphatase,
- Oligosaccharide Dehydrogenase,
- Glucose Dehydrogenase,
- Laccase,
- Tyrosinase,
- oder artverwandte Enzyme

verwendet werden.

Es ist anzumerken, dass niedermolekulare Enzyme die höchste Umsatzeffizienz und daher auch die höchste Empfindlichkeit gewährleisten können.

Mit den Enzymen ist es möglich, Moleküle, die in einer weiteren Lösung mit der ersten Elektrode in Kontakt gebracht werden, in ein erstes Teilmolekül einer ersten elektrischen Ladung und in ein zweites Teilmolekül einer zweiten elektrischen Ladung aufzuspalten.

Als spaltbare Moleküle werden gemäß diesen Ausführungsbeispielen folgende Moleküle eingesetzt:

- p-Aminophenyl-hexopyranoside,
- p-Aminophenyl-phosphate,
- p-Nitrophenyl-hexopyranoside,
- p-Nitrophenyl-phosphate, oder
- geeignete Derivate von

  a) Diaminen,
  b) Catecholaminen,
  c) $Fe(CN)_6^{4-}$,
  d) Ferrocen,
  e) Dicarboxylsäure,
  f) Ferrocenlysin,
  g) Osmiumbipyridyl-NH, oder
  h) PEG-Ferrocen2

verwendet werden.

An die erste Elektrode wird ein erstes Potential V1 angelegt und an die zweite Elektrode wird ein zweites elektrisches Potential V2 angelegt. Das erste elektrische Potential V1 ist größer als das zweite elektrische Potential V2.

Somit werden gemäß dem in **Fig.4a** bis **Fig.4c** dargestellten Reduktions-/Oxidations-Recycling-Vorgang in der weiteren Lösung Ladungsträger erzeugt, wodurch ein Kreisstrom, der im weiteren als Messstrom bezeichnet wird, generiert wird.

Fig.1c zeigt ein drittes Ausführungsbeispiel eines Biosensors 130, bei dem die erste Gesamtelektrode 131 gebildet wird durch eine Vielzahl von parallel geschalteten ersten Teilelektroden, die verzahnt mit einer Vielzahl von Elektrodensegmenten, die parallel geschaltet die zweite Gesamtelektrode 132 bilden, angeordnet sind.

Die ersten Teilelektroden 131 sind jeweils mit einem ersten elektrischen Anschluss 133 gekoppelt. Die ersten Elektrodensegmente 134 der zweiten Gesamtelektrode 132 sind paralleigeschaltet und mit einem zweiten elektrischen Anschluss 135 elektrisch gekoppelt.

Die zweiten Elektrodensegmente 136 der zweiten Gesamtelektrode 132 sind parallel geschaltet und jeweils mit einem dritten elektrischen Anschluss 137 elektrisch gekoppelt.

Die Interdigitalelektrodenanordnung entspricht grundsätzlich der aus [4] bekannten Elektrodenanordnung mit dem Unterschied, dass die zweite Elektrode nunmehr in zwei, allgemein in eine beliebige Anzahl n voneinander elektrisch isolierter Elektrodensegmente, die parallel geschaltet und jeweils unabhängig voneinander auswählbar und somit elektrisch koppelbar sind, unterteilt sind.

**Fig.6a** zeigt ein Beispiel einer Elektrodenanordnung mit einer Anzahl von drei Elektrodensegmenten der zweiten Elektrode.

Der Biosensor 600 gemäß diesem Ausführungsbeispiel weist somit eine Vielzahl erster Elektroden 601 auf und eine Vielzahl zweiter Elektroden 602.

Die zweiten Elektroden 602 weisen eine Vielzahl erster Elektrodensegmente 603, eine Vielzahl zweiter Elektrodensegmente 604 sowie eine Vielzahl dritter Elektrodensegmente 605 auf, wobei die einzelnen Elektrodensegmente 603, 604, 605 elektrisch voneinander isoliert angeordnet sind mittels einer Isolatorschicht 606.

Wie in **Fig.6b** dargestellt ist, sind die ersten Elektroden 601 jeweils mit einem ersten elektrischen Anschluss 607 gekoppelt und somit parallel geschaltet.

Ferner sind die ersten Elektrodensegmente 603 der zweiten Elektrode 602 parallel geschaltet und jeweils mit einem zweiten elektrischen Anschluss 608 gekoppelt.

Weiterhin sind die zweiten Elektrodensegmente 604 der zweiten Elektrode 602 parallel geschaltet und mit einem dritten elektrischen Anschluss 609 elektrisch gekoppelt.

Weiterhin sind die dritten Elektrodensegmente 605 ebenfalls parallel geschaltet und mit einem vierten elektrischen Anschluss 610 elektrisch gekoppelt.

Durch entsprechendes Auswählen der Elektrodensegmente 603, 604, 605 und deren elektrisches Zusammenschalten, wie es im weiteren näher erläutert wird, kann sehr genau die effektive Elektrodenfläche in ihrer Größe variiert werden und eingestellt werden, so dass der Messstrom in einem sehr genau definierten Dynamikbereich beibehalten werden kann.

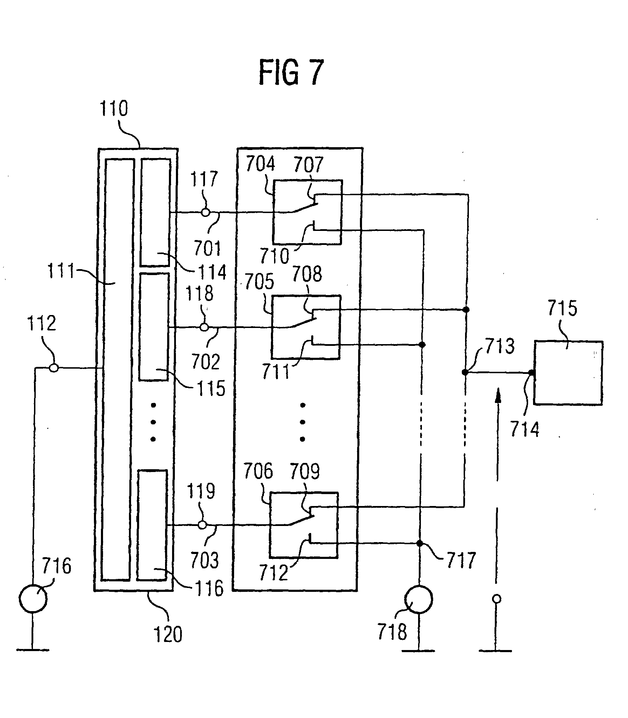

**Fig.7** zeigt eine Beschaltung des in **Fig.1b** dargestellten Biosensors 110.

Die elektrischen Anschlüsse 117, 118, 119 der Elektrodensegmente 114, 115, 116 der zweiten Elektrode 113 sind über elektrische Verbindungen 701, 702, 703 mit elektrischen Schaltern 704, 705, 706 elektrisch gekoppelt, wobei jeweils einer der elektrischen Schalter 704, 705, 706 mit einem elektrischen Anschluss 117, 118, 119 elektrisch gekoppelt ist.

Jeder elektrische Schalter 704, 705, 706 ist in einer ersten Schalterposition mit einem ersten Schalteranschluss 707, 708, 709 elektrisch gekoppelt und in einer zweiten Schalterposition jeweils mit einem zweiten Schalteranschluss 710, 711, 712.

Die ersten Schalteranschlüsse 707, 708, 709 sind miteinander elektrisch gekoppelt mittels eines ersten Sammelanschlusses 713 und der erste Sammelanschluss 713 ist ferner mit dem Eingang 714 einer Messelektronik 715 elektrisch gekoppelt.

Ferner zeigt **Fig.7** eine erste Spannungsquelle 716, die mit dem ersten elektrischen Anschluss 112 der ersten Elektrode 111 elektrisch gekoppelt ist, so dass das erste elektrische Potential V1 an der ersten Elektrode 111 angelegt ist.

Die zweiten Schalteranschlüsse 710, 711, 712 sind miteinander elektrisch gekoppelt mit einem zweiten Sammelanschluss 717, der mit einer zweiten Spannungsquelle 718 elektrisch gekoppelt ist, wodurch an die Elektrodensegmente, die mittels der Schalter 704, 705, 706 jeweils mit dem zweiten Schalteranschluss 710, 711, 712 gekoppelt sind, das zweite elektrische Potential V2 angelegt ist.

Durch das elektrische Koppeln der zweiten Spannungsquelle 718 an die zweiten Schalteranschlüssse 710, 711, 712, ist gewährleistet, dass der Reduktions-/Oxidations-Recycling-Vorgang unbeeinflusst bleibt von der jeweiligen Schalterstellung der Schalter 704, 705, 706. Auch wird durch die dargestellte Schaltungsanordnung gewährleistet, dass die Schaltung in einem gleichbleibenden Arbeitspunkt betrieben wird unabhängig von der Schalterposition der einzelnen Schalter 704, 705, 706.

Ferner ist das zweite elektrische Potential V2 auch an den ersten Sammelanschluss 713 angelegt und somit auch an die ausgewählten Elektrodensegmente, die mittels der Schalter 704, 705, 706 über die ersten Schalteranschlüsse 707, 708, 709 mit dem Eingang 714 der Messelektronik 715 gekoppelt sind.

Gemäß diesem Ausführungsbeispiel sind, wie in **Fig.7** dargestellt, das erste Elektrodensegment 114 und das zweite Elektrodensegment 115 der zweiten Elektrode 113 mittels des ersten Schalters 704 und des zweiten Schalters 705 mit den ersten Schalteranschlüssen 707, 708 elektrisch verbunden und damit mit der Messelektronik 715 gekoppelt.

Dies bedeutet, dass der an dem ersten Elektrodensegment 114 und dem zweiten Elektrodensegment 115 erzeugte Strom von der zweiten Elektrode 113 abgegriffen wird und der Messelektronik 715 über die Schalter 704, 705 zugeführt wird.

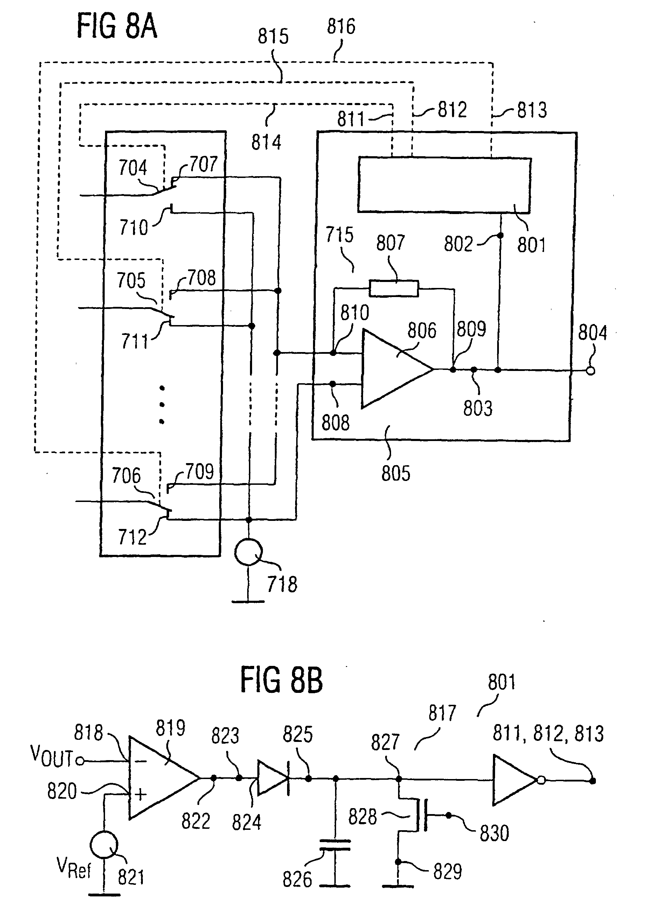

Wie in **Fig.8a** dargestellt ist, kann mit der Messelektronik 715 eine Schalterauswahleinheit 801 über dessen Eingang 802 gekoppelt sein derart, dass der Ausgang 803 der Messelektronik sowohl mit einem externen Anschluss 804, an dem eine Ausgangsspannung $V_{out}$ abgreifbar ist, als auch mit dem Eingang 802 der Schalterauswahleinheit 801 gekoppelt ist.

Die Messelektronik 715 weist einen Strom-Spannungswandler 805 auf, der einen Operationsverstärker 806 sowie einen elektrischen Widerstand 807 aufweist.

Der nicht-invertierende Eingang 808 des Operationsverstärkers 806 ist mit der zweiten Spannungsquelle 718 elektrisch gekoppelt.

Ferner ist der Ausgang 809 des Operationsverstärkers 806 über den elektrischen Widerstand 807 mit dem invertierenden Eingang 810 des Operationsverstärkers 806 sowie mit dem ersten Sammelanschluss 713 elektrisch gekoppelt.

Die Schalterauswahleinheit 801 ist derart eingerichtet, dass mittels Komparatoren verschiedene Wertebereiche vorbestimmt sind und entsprechend der Ausgangsspannung $V_{out}$ die Schalter 704, 705, 706, mit denen Ausgänge 811, 812, 813 der Schalterauswahleinheit 801 gekoppelt sind derart, dass die Schalter 704, 705, 706 mittels eines jeweiligen Ausgangssignals steuerbar sind, symbolisiert in **Fig.8** mittels gestrichelter Linien 814, 815, 816 dass der jeweilige Schalter 704, 705, 706 entweder in die erste Schalterposition oder in die zweite Schalterposition geschaltet werden kann und in dieser Schalterposition verbleibt, bis aufgrund des Ausgangssignals, d.h. dem Steuersignal an dem entsprechenden Ausgang 811, 812, 813 Schalterauswahleinheit 801 ein verändertes Steuersignal angelegt wird.

Die Schalterauswahleinheit 801 weist beispielsweise n Auswahlelemente 817 auf, deren Anzahl n der Anzahl auswählbarer Elektrodensegmente entspricht.

Jedes Auswahlelement 817 weist jeweils die in **Fig.8b** dargestellte Ausgestaltung auf.

Die Ausgangsspannung $V_{out}$ liegt an dem invertierenden Eingang 818 eines Operationsverstärkers 819 des jeweiligen Auswahlelements 817 an. An den nicht-invertierenden Eingang 820 des Operationsverstärkers 819 ist eine jeweilige, für jedes Auswahlelement 817 eigens vorbestimmte Referenz-Komparatorspannung Vref angelegt, in **Fig. 8b** symbolisiert durch eine Spannungsquelle 821.

Der Ausgang 822 des Operationsverstärkers 819 ist mit einem Eingang 823 einer Diode 824 gekoppelt. Der Ausgang 825 der Diode 824 ist mit einem Kondensator 826 gekoppelt, der mit seinem anderen Anschluss mit dem Massepotential gekoppelt ist.

Weiterhin ist der Ausgang 825 der Diode 824 mit dem Drain-Anschluss 827 eines Initialisierungstransistors 828 gekoppelt. Der Source-Anschluss 829 des Initialisierungstransistors 828 ist mit dem Massepotential gekoppelt. Mittels des Gate-Anschlusses 830 des Initialisierungstransistors 828 wird mit Hilfe eines Initialisierungssignals das Auswahlelement 817 initialisiert.

Weiterhin ist der Ausgang 825 der Diode 824 mit einem Eingang 831 eines Inverters 832 gekoppelt. Der Ausgang 833 des Inverters 832 ist mit dem jeweiligen Ausgang 811, 812, 813 der Schalterauswahleinheit 801 gekoppelt.

Aufgrund des Auswahlelements 817 wird der entsprechende Schalter aufgrund des Übersteigens der Ausgangsspannung $V_{out}$ über den Wert der jeweils vorgegebenen Referenz-Komparatorspannung $V_{ref}$, der mit dem jeweiligen Auswahlelement 817 gekoppelt ist, geschaltet und in die zweite Schalterposition gebracht, so dass das entsprechende Elektrodensegment keinen Beitrag mehr zu dem in die Messelektronik 715 fließenden Strom liefert.

Auf diese Weise wird sehr einfach und flexibel eine beliebig freie Auswahl der Elektrodensegmente der zweiten Elektrode erreicht.

In einer alternativen Ausführungsform ist es vorgesehen, dass die erste Elektrode in Elektrodensegmente unterteilt ist und die entsprechende Messelektronik gemäß dem oben beschriebenen Ausführungsbeispiel und die Schalterauswahleinheit mit den Elektrodensegmenten der ersten Elektrode elektrisch koppelbar sind.

Es ist anzumerken, dass die Erfindung nicht auf einen Reduktions-/Oxidations-Vorgang beschränkt ist, sondern dass die erfindungsgemäße Anordnung in jedem Bereich eingesetzt werden kann, in dem die Anforderungen eines stark variierenden Dynamikbereichs eines Messsignals kompensiert erfüllt soll.

Ferner ist darauf hinzuweisen, dass die Erfindung nicht auf die aus dem Stand der Technik bekannten Planarelektroden beschränkt ist.

So kann beispielsweise in einer alternativen Ausführungsform eine dritte Elektrode vorgesehen sein, die vorzugsweise zwischen der ersten Elektrode und der zweiten Elektrode bzw. deren Elektrodensegmenten angeordnet ist, dass der Reduktions/Oxidationsprozess im Rahmen des Reduktions-/Oxidations-Vorgangs zwischen der dritten Elektrode und der zweiten Elektrode abläuft.

Dies kann insbesondere dadurch gewährleistet werden, dass an die dritte Elektrode ein drittes elektrisches Potential angelegt wird, welches größer ist als das zweite elektrische Potential V2 und als das erste elektrische Potential V1. Ferner wird an die zweite Elektrode ein zweites elektrisches Potential V2 angelegt, welches kleiner ist als das erste elektrische Potential V1, das an die erste Elektrode angelegt wird.

Weiterhin können Elektroden im Rahmen einer alternativen Ausführungsform eingesetzt werden, die derart relativ zueinander angeordnet sind, dass sich zwischen den Elektroden im wesentlichen ungekrümmte Feldlinien eines zwischen den Elektroden erzeugten elektrischen Feldes ausbilden können.

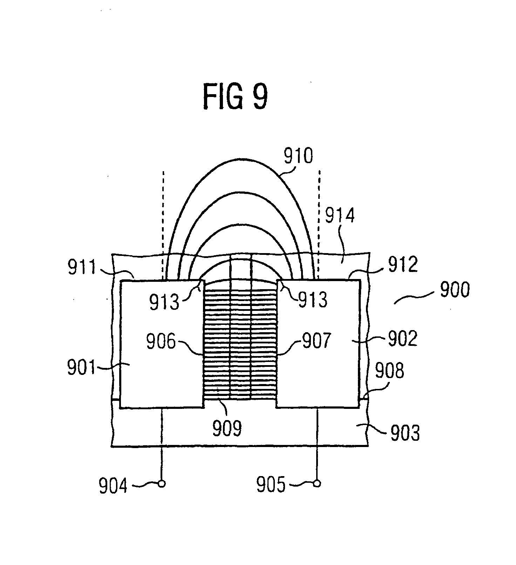

Dies kann beispielsweise erreicht werden durch Elektrodenanordnungen, wie sie im weiteren anhand der Figuren 9 bis 19A bis G näher erläutert werden.

**Fig.9** zeigt einen Biosensorchip 900 mit einer weiteren Elektrodenkonfiguration.

Der Biosensorchip 900 weist eine erste Elektrode 901 und eine zweite Elektrode 902 auf, die auf einer Isolatorschicht 903 derart angeordnet sind, dass die erste Elektrode 901 und die zweite Elektrode 902 voneinander elektrisch isoliert sind.

Die erste Elektrode 901 ist mit einem ersten elektrischen Anschluss 904 gekoppelt, und die zweite Elektrode 902 ist mit einem zweiten elektrischen Anschluss 905 gekoppelt.

Die Elektroden 901, 902 weisen eine quaderförmige Struktur auf, wobei sich eine erste Elektrodenfläche 906 der ersten Elektrode 901 und eine erste Elektrodenfläche 907 der zweiten Elektrode 902 im wesentlichen parallel zueinander ausgerichtet gegenüberstehen.

Dies wird dadurch erreicht, dass gemäß diesem Ausführungsbeispiel die Elektroden 901, 902 im wesentlichen bezüglich der Oberfläche 108 der Isolatorschicht 903 senkrechte Seitenwände 906, 907 aufweisen, welche die erste Elektrodenfläche 906 der ersten Elektrode 901 bzw. die erste Elektrodenfläche 907 der zweiten Elektrode 902 bilden.

Wird ein elektrisches Feld zwischen der ersten Elektrode 901 und der zweiten Elektrode 902 angelegt, so wird durch die sich im wesentlichen parallel zueinander ausgerichteten Elektrodenflächen 906, 907 ein Feldlinienverlauf mit Feldlinien 909 erzeugt, die zwischen den Oberflächen 906, 907 im wesentlichen ungekrümmt sind.

Gekrümmte Feldlinien 910 ergeben sich lediglich zwischen einer zweiten Elektrodenfläche 911 der ersten Elektrode 901 und einer zweiten Elektrodenfläche 912 der zweiten Elektrode 902, die jeweils für die Elektroden 901, 902 die oberen Oberflächen bilden, sowie in einem Randbereich 913 zwischen den Elektroden 901, 902.

Die ersten Elektrodenflächen 906, 907 der Elektroden 901, 902 sind als Haltebereiche zum Halten von Sondenmolekülen, die makromolekulare Biopolymere, die mittels des Biosensors 900 zu erfassen sind, binden können.

Die Elektroden 901, 902 sind gemäß diesem Ausführungsbeispiel aus Gold hergestellt.

Es werden kovalente Verbindungen zwischen den Elektroden und den Sondenmolekülen hergestellt, wobei der Schwefel zum Bilden einer Gold-Schwefel-Kopplung in Form eines Sulfids oder eines Thiols vorhanden ist.

Für den Fall, dass als Sondenmoleküle DNA-Sondenmoleküle verwendet werden, sind solche Schwefelfunktionalitäten Teil eines modifizierten Nukleotids, das mittels der sogenannten Phosphoramiditchemie während eines automatisierten DNA-Syntheseverfahrens am 3'-Ende oder am 5'-Ende des zu immobilisierenden DNA-Strangs eingebaut wird. Das DNA-Sondenmolekül wird somit an seinem 3'-Ende oder an seinem 5'-Ende immobilisiert.

Für den Fall, dass als Sondenmoleküle Liganden verwendet werden, werden die Schwefelfunktionalitäten durch ein Ende eines Alkyllinkers oder eines Alkylenlinkers gebildet, dessen anderes Ende eine für die kovalente Verbindung des Liganden geeignete chemische Funktionalität aufweist, beispielsweise einen Hydroxylrest, einen Acetoxyrest oder einen Succinimidylesterrest.

Die Elektroden, d.h. insbesondere die Haltebereiche werden beim Messeinsatz mit einem Elektrolyt 914, allgemein mit einer zu untersuchenden Lösung, bedeckt.

Befinden sich in der zu untersuchenden Lösung 914 die zu erfassenden makromolekularen Biopolymere, beispielsweise zu erfassende DNA-Stränge mit einer vorgegebenen Sequenz, die mit den immobilisierten DNA-Sondenmolekülen auf den Elektroden hybridisieren können, so hybridisieren die DNA-Stränge mit den DNA-Sondenmolekülen.

Sind in der zu untersuchenden Lösung 914 keine DNA-Stränge mit der zu der Sequenz der DNA-Sondenmolekülen komplementären Sequenz enthalten, so können keine DNA-Strängen aus der zu untersuchenden Lösung 914 mit den DNA-Sondenmolekülen auf den Elektroden 901, 902 hybridisieren.

Zwischen den Elektroden 901, 902 wird, wie oben erläutert wurde, ein Redox-Recycling-Vorgang gestartet werden und dadurch die Anzahl der markierten hybridisierten DNA-Stränge, allgemein der markierten gebundenen makromolekularen Biopolymere ermittelt werden.

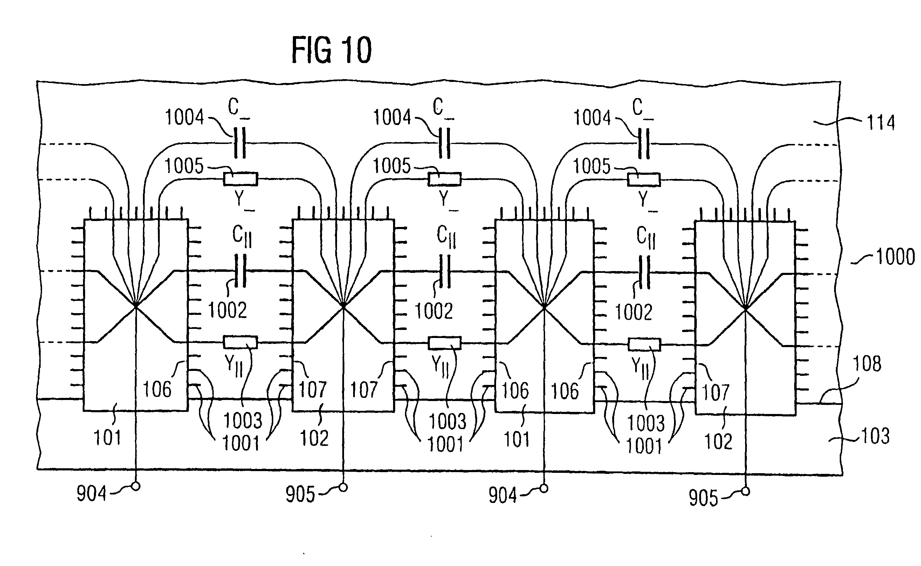

**Fig.10** zeigt einen Biosensor 1000 mit einer weiteren Elektrodenkonfiguration gemäß einem weiteren Ausführungsbeispiel der Erfindung.

Bei dem Biosensor 1000 sind in gleicher Weise wie bei dem Biosensor 900 gemäß dem in **Fig.9** gezeigten Ausführungsbeispiel zwei Elektroden 901, 902 vorgesehen, die auf der Isolatorschicht 903 aufgebracht sind.

Im Unterschied zu dem Biosensor 900 mit lediglich zwei quaderförmigen Elektroden sind die zwei Elektroden gemäß dem in **Fig.10** dargestellten Biosenscr 1000 als eine Vielzahl von jeweils abwechselnd angeordneten, parallel geschalteten Elektroden in Form der bekannten Interdigitalelektrodenanordnung angeordnet.

**Fig.10** zeigt zur weiteren Veranschaulichung ferner ein schematisches elektrisches Ersatzschaltbild, das in die Darstellung des Biosensors 1000 eingezeichnet ist.

Da sich zwischen den im wesentlichen sich parallel gegenüberstehenden Elektrodenflächen 906, 907 der Elektroden 901, 902, wie in **Fig.9** dargestellt wurde, im wesentlichen ungekrümmte Feldlinien bezüglich der Oberfläche 908 der Isolatorschicht 903 ergeben, überwiegt der Anteil der durch die ungekrümmten Feldlinien erzeugten ersten Kapazität 1002 und des ersten Leitwerts 1003 verglichen mit der zweiten Kapazität 1004 und des zweiten Leitwerts 1005, die durch die gekrümmten Feldlinien 910 erzeugt werden.

Dieser erheblich größerer Anteil der ersten Kapazität 1002 und des ersten Leitwerts 1003 an dem Gesamtleitwert, der sich aus der Summe der ersten Kapazität 1002 und der zweiten Kapazität 1004 sowie des ersten Leitwerts 1003 und des zweiten Leitwerts 1005 ergeben, führt dazu, dass die Sensitivität des Biosensors 1000 bei Änderung des Zustandes des Biosensors 1000, d.h. bei Hybridisierung von DNA-Strängen in der zu untersuchenden Lösung 914 mit auf den Haltebereichen auf den Elektrodenflächen 906, 907 immobilisierten DNA-Sondenmolekülen 1001 erheblich erhöht wird.

Somit ist anschaulich bei gleichen lateralen Abmessungen der Elektroden 901, 902 und bei gleichen Abmessungen des zuvor eingeführten aktiven Bereichs, d.h. bei gleicher Fläche der Haltebereiche auf den Elektrodenflächen ein wesentlich größerer Anteil von Feldlinien eines angelegten elektrischen Feldes zwischen den Elektroden 901, 902 in dem Volumen enthalten, in dem die Hybridisierung stattfindet, wenn die zu erfassenden DNA-Stränge in der zu untersuchenden Lösung 914 enthalten sind als bei einer Planarelektrodenanordnung.

In anderen Worten bedeutet dies, dass die Kapazität der erfindungsgemäßen Anordnung pro Chipfläche deutlich größer ist als die Kapazität pro Chipfläche bei einer Planarelektrodenanordnung.

Im weiteren werden einige Alternativenmöglichkeiten zur Herstellung einer quaderförmigen Sensorelektrode mit im wesentlichen senkrechten Seitenwänden erläutert.

**Erstes Verfahren zum Herstellen von Metallelektroden mit im wesentlichen senkrechten Seitenwänden, die Sondenmoleküle immobilisieren können**

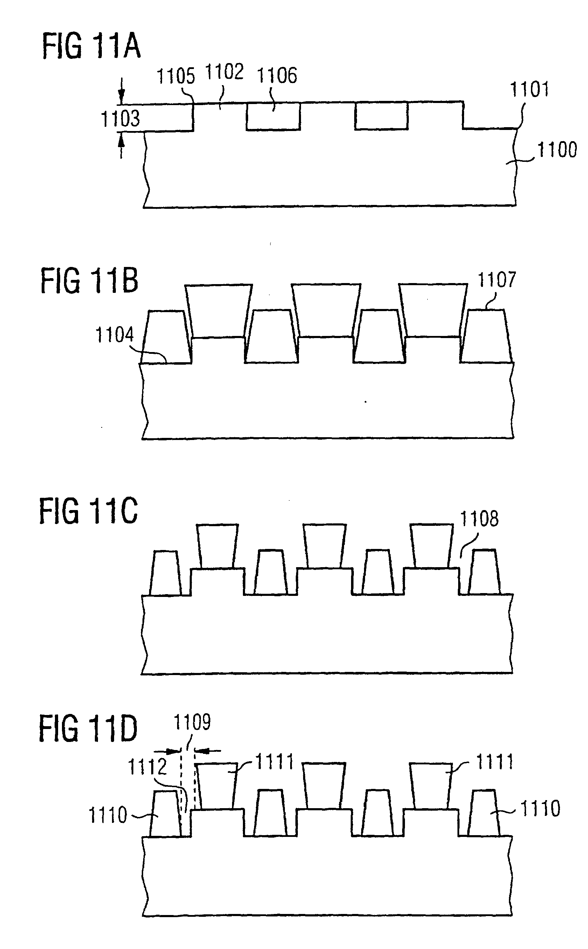

**Fig.11a** zeigt ein Siliziumsubstrat 1100, wie es für bekannte CMOS-Prozesse hergestellt wird.

Auf dem Siliziumsubstrat 1100, in dem sich bereits integrierte Schaltungen und/oder elektrische Anschlüsse für die zu bildenden Elektroden befinden, wird eine Isolatorschicht 1101, die auch als Passivierungsschicht dient, in ausreichender Dicke, gemäß dem Ausführungsbeispiel in einer Dicke von 500 nm, mittels eines CVD-Verfahrens aufgebracht.

Die Isolatorschicht 1101 kann aus Siliziumoxid $SiO_2$ oder Siliziumnitrid $Si_3N_4$ hergestellt sein.

Die Interdigitalanordnung des Biosensors 1000 gemäß dem oben dargestellten Ausführungsbeispiel wird mittels Photolithographie auf der Isolatorschicht 1101 definiert.

Anschließend werden mittels eines Trockenätzverfahrens, z.B. dem Reactive Ion Etching (RIE), in der Isolatorschicht 1101 Stufen 1102 erzeugt, d.h. geätzt, gemäß dem Ausführungsbeispiel in einer Mindesthöhe 1103 von ungefähr 100 nm.

Die Höhe 1103 der Stufen 1102 muss ausreichend groß sein für einen anschließenden selbstjustierenden Prozess zum Bilden der Metallelektrode.

Es ist darauf hinzuweisen, dass zum Auftragen der Isolatorschicht 1101 alternativ auch ein Aufdampfverfahren oder ein sputterverfahren eingesetzt werden kann.

Bei der Strukturierung der Stufen 1102 ist zu beachten, dass die Flanken der Stufen 1102 ausreichend steil sind, so dass sie hinreichend scharfe Kanten 1105 bilden. Ein Winkel 1106 der Stufenflanken gemessen zur Oberfläche der Isolatorschicht 1101 sollte gemäß dem Ausführungsbeispiel mindestens 50 grad betragen.

In einem weiteren Schritt wird eine Hilfsschicht 1104 (vgl. **Fig.11b**) der Dicke von ungefähr 10 nm aus Titan auf die stufenförmige Isolatorschicht 1101 aufgedampft.

Die Hilfsschicht 1104 kann Wolfram, und/oder Nickel-Chrom, und/oder Molybdän aufweisen.

Es ist zu gewährleisten, dass die in einem weiteren Schritt aufgetragene Metallschicht, gemäß dem Ausführungsbeispiel eine Metallschicht 1107 aus Gold, an den Kanten 1105 der Stufen 1102 derart porös aufwächst, dass es möglich ist, in einem weiteren Verfahrensschritt an den Stufenübergängen jeweils eine Spalte 1108 in die ganzflächig aufgetragene Goldschicht 1107 zu ätzen.

In einem weiteren Verfahrensschritt wird die Goldschicht 1107 für den Biosensor 1000 aufgebracht.

Gemäß dem Ausführungsbeispiel weist die Goldschicht eine Dikke von ungefähr 500 nm bis ungefähr 2000 nm auf.

Es ist hinsichtlich der Dicke der Goldschicht 1107 lediglich zu gewährleisten, dass die Dicke der Goldschicht 1107 ausreichend ist, so dass die Goldschicht 1107 porös kolumnar aufwächst.

In einem weiteren Schritt werden Öffnungen 1108 in die Goldschicht 1107 geätzt, so dass sich Spalten ausbilden.

Zum Nassätzen der Öffnungen wird eine Ätzlösung aus 7,5 g Super Strip 100™ (Markenname der Firma Lea Ronal GmbH, Deutschland) und 20 g KCN in 1000 ml Wasser $H_2O$ verwendet.

Durch das kolumnare Wachstum des Goldes, allgemein des Metalls, während des Aufdampfens auf die Haftschicht 1104 wird ein anisotroper Atzangriff erzielt, so dass der Oberflächenabtrag des Goldes ungefähr im Verhältnis 1:3 erfolgt.

Durch das Atzen der Goldschicht 1107 werden die Spalten 1108 abhängig von der Zeitdauer des Atzvorgangs gebildet.

Dies bedeutet, dass die Zeitdauer des Ätzprozesses die Basisbreite, d.h. den Abstand 1109 zwischen den sich ausbildenden Goldelektroden 1110, 1111 bestimmt.

Nachdem die Metallelektroden eine ausreichende Breite aufweisen und der Abstand 1109 zwischen den sich bildenden Goldelektroden 1110, 1111 erreicht sind, wird das Nassätzen beendet.

Es ist anzumerken, dass aufgrund des porösen Aufdampfens das Ätzen in zu der Oberfläche der Isolatorschicht 1101 parallelen Richtung wesentlich schneller erfolgt als in zu der Oberfläche der Isolatorschicht 1101 senkrechten Richtung.

Es ist darauf hinzuweisen, dass alternativ zu einer Goldschicht auch andere Edelmetalle, wie beispielsweise Platin, Titan oder Silber verwendet werden können, da diese Materialien ebenfalls Haltebereiche aufweisen können bzw. mit einem geeigneten Material beschichtet werden können zum Halten von immobilisierten DNA-Sondenmolekülen oder allgemein zum Halten von Sondenmolekülen, und ein kolumnares Wachstum beim Aufdampfen aufweisen.

Für den Fall, dass die Haftschicht 1104 in den geöffneten Spalten 1112 zwischen den Metallelektroden 1110, 1111 entfernt werden soll, erfolgt dies ebenfalls selbstjustierend, indem man die Goldelektroden 1110, 1111 als Ätzmaske verwendet.

Gegenüber den bekannten Interdigitalelektroden weist die Struktur gemäß diesem Ausführungsbeispiel insbesondere den Vorteil auf, dass durch das selbstjustierende Öffnen der Goldschicht 1107 über den Kanten 1105 der Abstand zwischen den Elektroden 1110, 1111 nicht an eine minimale Auflösung des Herstellungsprozesses gebunden ist, d.h. der Abstand 1109 zwischen den Elektroden 1110, 1111 kann sehr schmal gehalten werden.

Somit ergibt sich gemäß diesem Verfahren der Biosensor 1000 gemäß dem in **Fig.10** dargestellten Ausführungsbeispiel mit den entsprechenden Metallelektroden.

### Zweites Verfahren zur Herstellung von Metallelektroden mit im wesentlichen senkrechten Seitenwänden, die Sondenmoleküle immobilisieren können

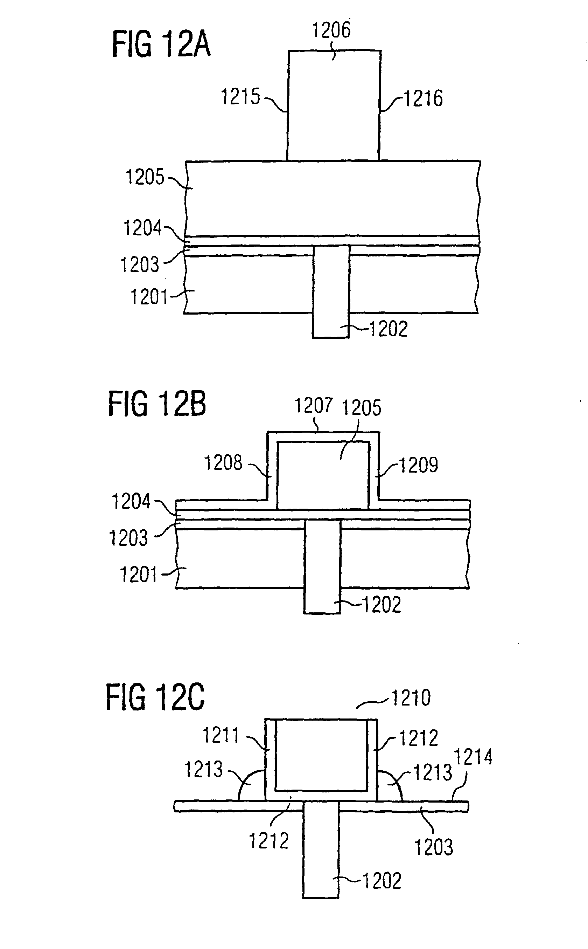

Bei dem in den **Fig.12a** bis **Fig.12c** dargestellten Herstellungsverfahren wird von einem Substrat 1201 ausgegangen, beispielsweise von einem Silizium-Substrat-Wafer (vgl. **Fig.12a**), auf dem bereits eine Metallisierung 1202 als elektrischer Anschluss vorgesehen ist, wobei auf dem Substrat 1201 schon eine Ätzstoppschicht 1203 aus Siliziumnitrid $Si_3N_4$ aufgebracht ist.

Auf dem Substrat wird eine Metallschicht 1204, gemäß dem Ausführungsbeispiel eine Goldschicht 1204 aufgebracht mittels eines Aufdampfverfahrens.

Alternativ kann ein Sputterverfahren oder ein CVD-Verfahren zum Aufbringen der Goldschicht 1204 auf die Ätzstoppschicht 1203 eingesetzt werden.

Allgemein weist die Metallschicht 1204 das Metall auf, aus dem die zu bildende Elektrode gebildet werden soll.

Auf der Goldschicht 1204 wird eine elektrisch isolierende Hilfsschicht 1205 aus Siliziumoxid $SiO_2$ mittels eines CVD-Verfahrens (alternativ mittels eines Aufdampfverfahrens oder eines Sputterverfahrens) aufgebracht.

Durch Einsatz der Photolithographie-Technologie wird eine Lackstruktur aus einer Lackschicht 1206 gebildet, beispielsweise eine quaderförmige Struktur, welche der Form der zu bildenden Elektrode entspricht.

Soll ein im weiteren beschriebenes Biosensor-Array mit einer Vielzahl von Elektroden erzeugt werden, wird mittels der Photolithographie eine Lackstruktur erzeugt, die in ihrer Form der zu bildenden Elektroden entsprechen, die das Biosensor-Array bilden.

In anderen Worten ausgedrückt bedeutet dies, dass die lateralen Abmessungen der gebildeten Lackstruktur den Abmessungen der zu erzeugenden Sensorelektrode entsprechen.

Nach Aufbringen der Lackschicht 1206 und der entsprechenden Belichtung, die die entsprechenden Lackstrukturen vorgibt, wird die Lackschicht in den nicht "entwickelten", d.h. nicht belichteten Bereichen beispielsweise mittels Veraschen oder nasschemisch entfernt.

Auch wird die Hilfsschicht 1205 in den nicht durch die Photolackschicht 1206 geschützten Bereichen mittels eines Nassätzverfahrens oder Trockenätzverfahrens entfernt.

In einem weiteren Schritt wird nach Entfernen der Lackschicht 1206 über der übrig gebliebenen Hilfsschicht 1205 eine weitere Metallschicht 1207 als Elektrodenschicht derart konform aufgebracht, dass die Seitenflächen 1208, 1209 der restlichen Hilfsschicht 1205 mit dem Elektrodenmaterial, gemäß dem Ausführungsbeispiel mit Gold, bedeckt sind (vgl. **Fig.12b**).

Das Aufbringen kann mittels eines CVD-Verfahrens oder eines Sputterverfahrens oder mit einem Ion-Metal-Plasma-Verfahren erfolgen.

In einem letzten Schritt (vgl. **Fig.12c**) wird eine Spacer-Ätzung durchgeführt, bei der durch gezieltes Überätzen der Metallschichten 1204, 1207 die gewünschte Struktur der Elektrode 1210 gebildet wird.

Die Elektrode 1210 weist somit die nicht in dem Ätzschritt des Ätzens der Metallschichten 1204, 1207 weggeätzten Spacer 1211, 1212 auf sowie den unmittelbar unter der restlichen Hilfsschicht 1205 angeordneten Teil der ersten Metallschicht 1204, der mittels des Ätzverfahrens nicht weggeätzt worden ist.

Die Elektrode 1210 ist mit dem elektrischen Anschluss, d.h. der Metallisierung 1202 elektrisch gekoppelt.

Die Hilfsschicht 1205 aus Siliziumoxid kann bei Bedarf durch eine weitere Ätzung, beispielsweise im Plasma oder nasschemisch, mittels eines Verfahrens entfernt werden, bei dem Selektivität zur Ätzstoppschicht 1203 gegeben ist.

Diese ist beispielsweise gewährleistet, wenn die Hilfsschicht 1205 aus Siliziumoxid besteht und die Ätzstoppschicht 1203 Siliziumnitrid aufweist.

Die Steilheit der Wände der Elektrode in dem Biosensorchip 900, 1000, repräsentiert durch den Winkel 1213 zwischen den Spacer 1211, 1212 und der Oberfläche 1214 der Atzstoppschicht 1203, wird somit durch die Steilheit Flanken der restlichen Hilfsschicht 1205, d.h. insbesondere der Steilheit der Lackflanken 1215, 1216 der strukturierten Lackschicht 1206 bestimmt.

**Drittes Verfahren zur Herstellung von Metallelektroden mit im wesentlichen senkrechten Seitenwänden, die Sondenmoleküle immobilisieren können**

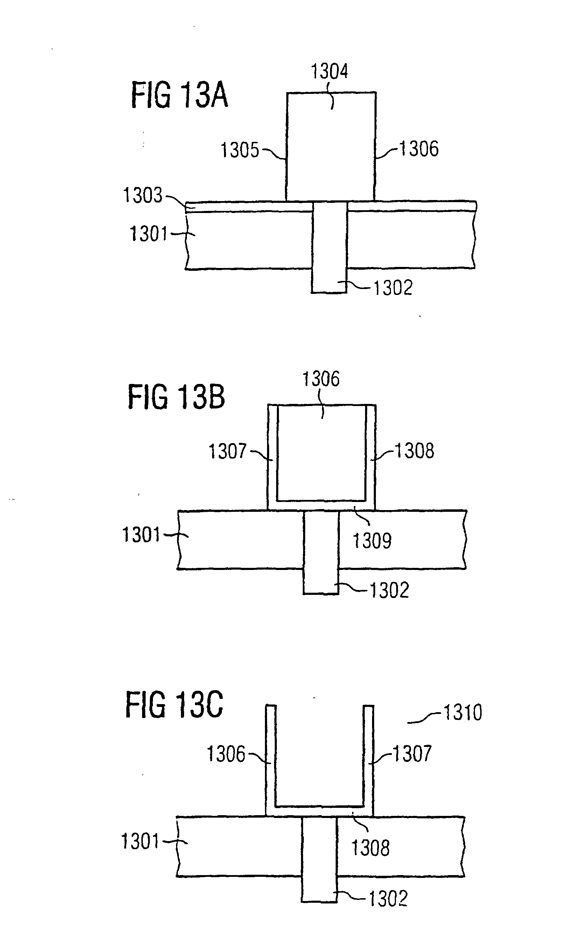

In den **Fig.13a** bis **Fig.13c** ist eine weitere Möglichkeit zum Herstellen einer Elektrode mit im wesentlichen senkrechten Wänden dargestellt.

Wiederum wird wie bei dem zweiten Beispiel zum Herstellen einer Elektrode dargestellt, von einem Substrat 1301 ausgegangen, auf dem bereits eine Metallisierung 1302 für den elektrischen Anschluss der zu bildenden Elektrode des Biosensors vorgesehen ist.

Auf dem Substrat 1301 aus Silizium wird eine Metallschicht 1303 als Elektrodenschicht aufgedampft, wobei die Metallschicht 1303 das für die Elektrode zu verwendende Material aufweist, gemäß diesem Ausführungsbeispiel Gold.

Alternativ zu dem Aufdampfen der Metallschicht 1303 kann die Metallschicht 1303 auch mittels eines Sputterverfahrens oder mittels eines CVD-Verfahrens auf dem Substrat 1301 aufgebracht werden.

Auf der Metallschicht 1303 wird eine Photolackschicht 1304 aufgebracht und mittels Photolithographie-Technologie derart strukturiert, dass eine Lackstruktur entsteht, die nach Entwickeln und Entfernen der entwickelten Bereiche den lateralen Abmessungen der zu bildenden Elektrode bzw. allgemein des zu bildenden Biosensor-Arrays entspricht.

Die Dicke der Photolackschicht 1304 entspricht im wesentlichen der Höhe der zu erzeugenden Elektroden.

Bei einer Strukturierung in einem Plasma mit Prozessgasen, die zu keiner Reaktion des Elektrodenmaterials führen können, insbesondere in einem Inertgas-Plasma, beispielsweise mit Argon als Prozessgas, erfolgt der Abtrag des Materials gemäß diesem Ausführungsbeispiel mittels physikalischem Sputter-Abtrag.

Dabei wird das Elektrodenmaterial aus der Metallschicht 1303 in einem Redepositionsprozess an die im wesentlichen senkrechten Seitenwände 1305, 1306 der strukturierten, nach Veraschen der entwickelten Lackstruktur nicht entfernten Lackelemente gesputtert, wo es keinem weiteren Sputterangriff mehr ausgesetzt ist.

Eine Redeposition von Elektrodenmaterial auf die Lackstruktur schützt die Lackstruktur vor weiterem Abtrag.

Aufgrund des Sputterns bilden sich an den Seitenwänden 1305, 1306 der Lackstruktur Seitenschichten 1307, 1308 aus dem Elektrodenmaterial, gemäß dem Ausführungsbeispiel aus Gold.

Die Seitenschichten 1307, 1308 sind elektrisch mit einem nicht entfernten Teil 1309 der Metallschicht 1303, der sich unmittelbar unterhalb der restlichen Lackstruktur 1306 befindet, gekoppelt sowie ferner mit der Metallisierung 1303 (vgl. **Fig.13b).**

In einem letzten Schritt (vgl. **Fig.13c**) wird die Lackstruktur 1306, d.h. der Photolack, der sich in dem durch die Seitenschichten 1307, 1308 sowie die übrig gebliebene Metallschicht 1309 gebildeten Volumen befindet, mittels Veraschen oder nasschemisch entfernt.

Ergebnis ist die in **Fig.13c** dargestellte Elektrodenstruktur 1310, die gebildet wird mit den Seitenwänden 1307, 1308 sowie dem nicht entfernten Teil 1309, der den Boden der Elektrodenstruktur bildet und mit der Metallisierung 1303 elektrisch gekoppelt ist.

Wie auch im vorangegangenen dargestellten Herstellungsverfahren wird die Steilheit der Seitenwände 1307, 1308 der gebildeten Elektrode bei diesem Verfahren durch die Steilheit der Lackflanken 1305, 1306 bestimmt.

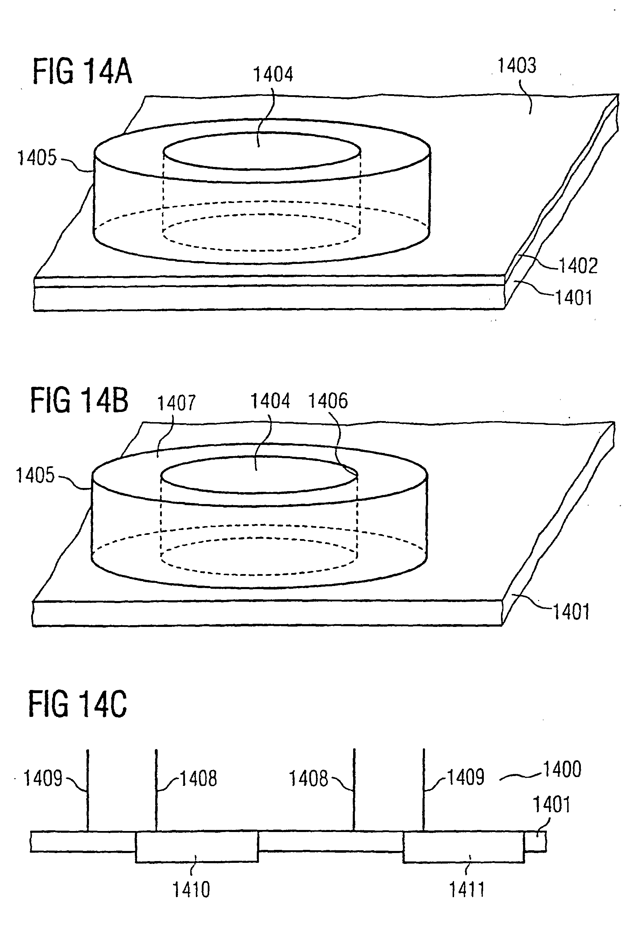

In den **Fig.14a** bis **Fig.14c** ist ein weiteres Ausführungsbeispiel der Erfindung mit zylinderförmigen, auf dem Substrat senkrecht hervortretenden Elektroden dargestellt.

Zur Herstellung des Biosensors 1400 mit zylinderförmigen Elektroden, die im wesentlichen senkrecht auf einem Substrat 1401 aus Siliziumoxid angeordnet sind, wird eine Metallschicht 1402 als Elektrodenschicht aus dem gewünschten Elektrodenmaterial, gemäß dem Ausführungsbeispiel aus Gold, mittels aufgebracht eines Aufdampf-Verfahrens.

Auf der Metallschicht 1402 wird eine Photolackschicht aufgebracht und die Photolackschicht wird mittels einer Maske belichtet derart, dass sich nach Entfernen der nicht belichteten Bereiche die in **Fig.14a** dargestellte zylinderförmige Struktur 1403 auf der Metallschicht 1402 ergibt.

Die zylinderförmige Struktur 1403 weist einen Photoresist-Torus 1404 sowie ein zylinderförmiger Photoresist-Ring 1405 auf, die konzentrisch um den Photoresist-Torus 1404 angeordnet ist.

Zwischen dem Photoresist-Torus 1404 und dem Photoresist-Ring 1405 wird der Photolack entfernt, beispielsweise mittels Veraschens oder nasschemisch.

Durch Einsatz eines Sputterverfahrens wird, wie im Zusammenhang mit dem oben beschriebenen Verfahren zur Herstellung einer Elektrode, mittels eines Redepositionsprozess, eine Metallschicht 1406 um den Photolack-Torus 1404 aufgetragen.

In gleicher Weise bildet sich eine innere Metallschicht 1407 um den Photoresist-Ring 1405 (vgl. **Fig.14b**).

In einem weiteren Schritt wird das strukturierte Photolack-Material mittels Veraschen oder nasschemisch entfernt, so dass zwei zylinderförmige Elektroden 1408, 1409 gebildet werden.

Das Substrat 1401 wird in einem letzten Schritt so weit entfernt, beispielsweise mittels eines zu dem Elektrodenmaterial selektiven Plasma-Ätzprozesses, dass die Metallisierungen in dem Substrat freigelegt sind und mit den zylinderförmigen Elektroden elektrisch koppeln.

Die innere zylinderförmige Elektrode 1408 ist somit mit einem ersten elektrischen Anschluss 1410 elektrisch gekoppelt und die äußere zylinderförmige Elektrode 1409 ist elektrisch gekoppelt mit einem zweiten elektrischen Anschluss 1411.

Die restliche Metallschicht 1402, die durch das Sputtern zwischen den zylinderförmigen Elektroden 1408, 1409 noch nicht entfernt wurde, wird in einem letzten Schritt mittels eines Sputter-Ätzprozesses entfernt. Ebenso wird die Metallschicht 1402 auf diese Weise entfernt.

Es ist in diesem Zusammenhang anzumerken, dass auch gemäß diesem Ausführungsbeispiel die Metallisierungen für die elektrischen Anschlüsse 1410, 1411 in dem Substrat 1401 zu Beginn des Verfahrens schon vorgesehen sind.

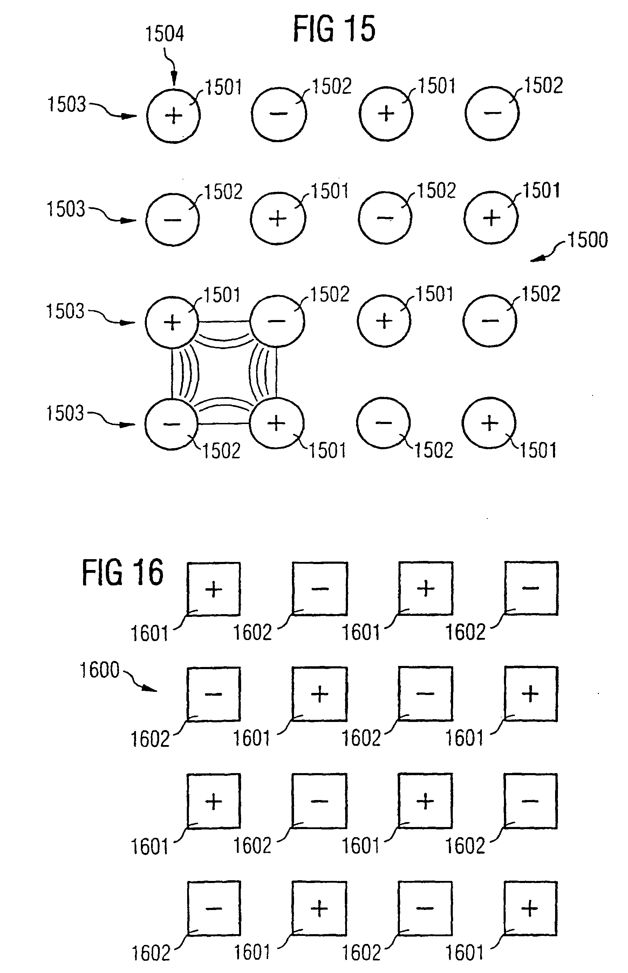

**Fig.15** zeigt eine Draufsicht eines Biosensor-Arrays 1500, in dem zylinderförmige Elektroden 1501, 1502 enthalten sind.

Jede erste Elektrode 1501 weist ein positives elektrisches Potential auf.

Jede zweite Elektrode 1502 des Biosensor-Arrays 1500 weist ein bezüglich der jeweiligen benachbarten ersten Elektrode 1501 negatives elektrisches Potential auf.

Die Elektroden 1501, 1502 sind in Zeilen 1503 und Spalten 1504 angeordnet.

In jeder Zeile 1503 und in jeder Spalte 1504 sind jeweils die ersten Elektroden 1501 und die zweiten Elektroden 1502 alternierend angeordnet, d.h. jeweils unmittelbar neben einer ersten Elektrode 1501 ist in einer Zeile 1503 oder einer Spalte 1504 eine zweite Elektrode 1502 angeordnet und neben einer zweiten Elektrode 1502 ist jeweils in einer Zeile 1503 oder einer Spalte 1504 eine erste Elektrode 1501 angeordnet.

Auf diese Weise ist sichergestellt, dass zwischen den einzelnen Elektroden ein elektrisches Feld erzeugt werden kann mit in Richtung der Höhe der Zylinderelektroden 1501, 1502 im wesentlichen ungekrümmten Feldlinien.

Auf den Elektroden ist jeweils, wie oben dargestellt, eine große Anzahl DNA-Sondenmoleküle immobilisiert.

Wird nun ein eine zu untersuchende Lösung (nicht dargestellt) auf das Biosensor-Array 1500 aufgebracht, so hybridisieren die DNA-Stränge mit den auf den Elektroden immobilisierten, dazu komplementären DNA-Sondenmolekülen.

Auf diese Weise kann mittels des oben beschriebenen Redox-Recycling-Vorgangs wiederum die Existenz oder Nicht-Existenz von DNA-Strängen einer vorgegebenen Sequenz in einer zu untersuchenden Lösung mittels des Biosensor-Arrays 1500 erfasst werden.

**Fig.16** zeigt ein weiteres Ausführungsbeispiel eines Biosensor-Arrays 1600 mit einer Vielzahl quaderförmiger Elektroden 1601, 1602.

Die Anordnung der quaderförmigen Elektroden 1601, 1602 ist entsprechend der Anordnung der zylinderförmigen Elektroden 1501, 1502, wie sie in **Fig.15** dargestellt worden ist und oben erläutert wurde.

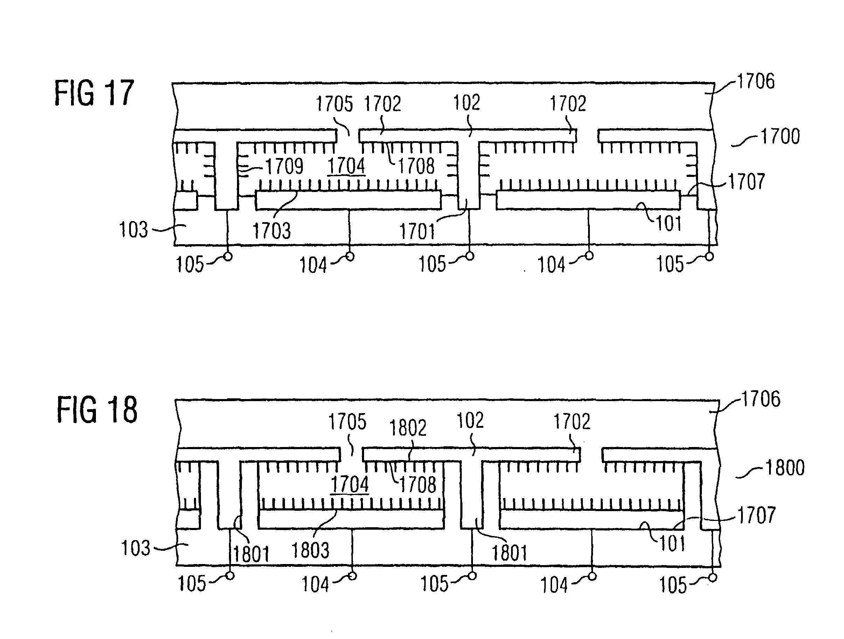

**Fig.17** zeigt eine Elektrodenanordnung eines Biosensorchips 1700 gemäß einem weiteren Ausführungsbeispiel der Erfindung.

Auf der Isolatorschicht 903 ist die erste Elektrode 901 aufgebracht und mit dem ersten elektrischen Anschluss 904 elektrisch gekoppelt.

Die zweite Elektrode 902 ist ebenfalls auf der Isolatorschicht 903 aufgebracht und mit dem zweiten elektrischen Anschluss 905 elektrisch gekoppelt.

Wie in **Fig.17** gezeigt ist, weist die zweite Elektrode gemäß diesem Ausführungsbeispiel gegenüber der vorangegangenen beschriebenen zweite Elektrode eine unterschiedliche Form auf.

Die erste Elektrode ist, wie aus **Fig.17** ersichtlich, eine Planarelektrode und die zweite Elektrode ist T-förmig ausgestaltet.

Jede T-förmige zweite Elektrode weist einen ersten Schenkel 1701 auf, der im wesentlichen senkrecht zu der Oberfläche 1707 der Isolatorschicht 903 angeordnet.

Weiterhin weist die zweite Elektrode 902 senkrecht zu dem ersten Schenkel 1701 angeordnete zweite Schenkel 1702 auf, die zumindest teilweise über der Oberfläche 1703 der jeweiligen ersten Elektrode 901 angeordnet sind.

Wie **Fig.17** zu entnehmen ist, sind mehrere erste Elektroden 901 und mehrere zweite Elektroden 902 parallelgeschaltet, so dass sich aufgrund der T-förmigen Struktur der zweiten Elektrode 902 ein Hohlraum 1704 ausbildet, der gebildet wird durch zwei neben einander angeordnete zweite Elektroden 902, eine erste Elektrode 901 sowie die Isolatorschicht 903.

Die einzelnen ersten und zweiten Elektroden 901, 902 sind mittels der Isolatorschicht 903 voneinander elektrisch isoliert.

Zwischen den einzelnen zweiten Schenkeln 1702 der zweiten Elektrode 902 ist für jeden Hohlraum 1704 eine Öffnung 1705 vorgesehen, die ausreichend groß ist, so dass bei Aufbringen eines Elektrolyts 1706 auf den Biosensor 1700 das Elektrolyt und eventuell in der zu untersuchenden Lösung 1706, beispielsweise einem Elektrolyt, enthaltene DNA-Stränge durch die Öffnung 1705 in den Hohlraum 1704 gelangen können.

Auf Haltebereichen an den ersten und zweiten Elektroden sind DNA-Sondenmoleküle 1709 immobilisiert, die mit den entsprechenden zu erfassenden DNA-Strängen vorgegebener Sequenz hybridisieren können.

Wie **Fig.17** zu entnehmen ist, bilden sich aufgrund der einander gegenüberliegenden, im wesentlichen parallel zueinander ausgerichteten Oberflächen der zweiten Elektrode 1708 bzw. der ersten Elektrode 1703, an denen die Haltebereiche zum Halten der DNA-Sondenmoleküle 1709 vorgesehen sind, bei Anlegen eines elektrischen Feldes zwischen der ersten Elektrode 901 und der zweiten Elektrode 902 im wesentlichen ungekrümmte Feldlinien aus.

**Fig.18** zeigt einen Biosensor 1800 gemäß einem weiteren Ausführungsbeispiel der Erfindung.

Der Biosensor 1800 gemäß dem weiteren Ausführungsbeispiel entspricht im wesentlichen dem oben erläuterten und in **Fig.17** gezeigten Biosensor 1700 mit dem Unterschied, dass an Seitenwänden des ersten Schenkels 1701 der zweiten Elektrode 902 keine Haltebereiche mit immobilisierten DNA-Sondenmolekülen 1709 vorgesehen sind, sondern dass die Oberfläche 1801 der ersten Schenkel 1701 der zweiten Elektrode 902 mit Isolatormaterial der Isolatorschicht 903 oder einer weiteren isolierenden Schicht bedeckt sind.

Gemäß dem in **Fig.18** gezeigten Ausführungsbeispiel sind Haltebereiche auf der ersten und auf der zweiten Elektrode 901, 902 demnach lediglich an unmittelbar sich gegenüberliegenden Oberflächen der Elektroden, d.h. an der Oberfläche 1802 des zweiten Schenkels der zweiten Elektrode 902, und an der Oberfläche 1803 der ersten Elektrode 901.

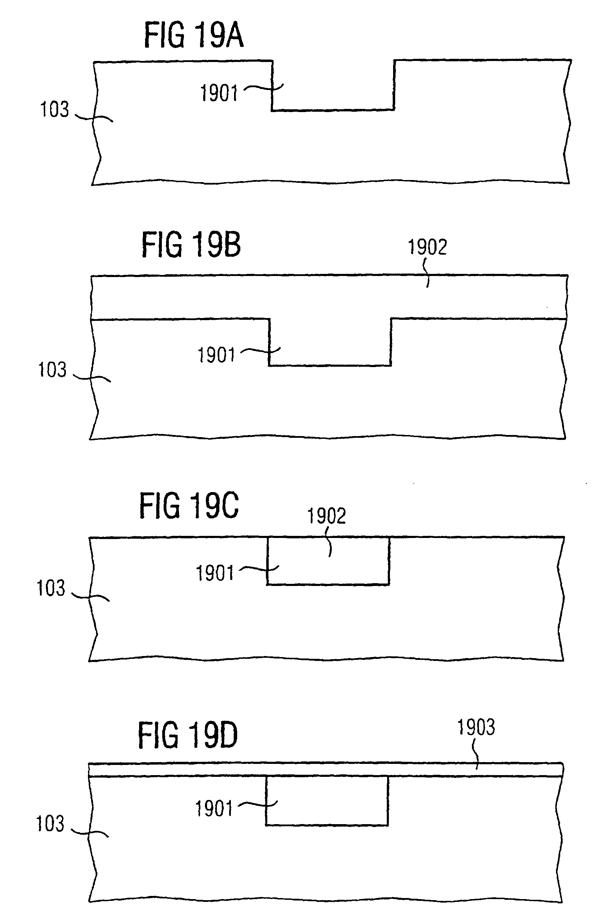

In den **Fig.19a** bis **Fig.19g** sind einzelne Verfahrensschritte zum Herstellen der ersten Elektrode 901 und der zweiten Elektrode 902 in den Biosensoren 1700, 1800 dargestellt.

In die Isolatorschicht 903 als Substrat, gemäß dem Ausführungsbeispiel aus Siliziumoxid wird unter Verwendung einer Maskenschicht, beispielsweise aus Photolack, eine Struktur in die Isolatorschicht 903 geätzt, deren Form der zu bildenden ersten Elektrode 901 entspricht.

Nach Entfernen der Maskenschicht durch Veraschen oder durch ein nasschemisches Verfahren wird ganzflächig eine Schicht aus dem gewünschten Elektrodenmaterial auf der Isolatorschicht 903 aufgebracht derart, dass die zuvor geätzte Struktur 1901 (vgl. **Fig.19a**) zumindest vollständig gefüllt ist, wobei die Struktur 1901 auch überfüllt sein kann (vgl. **Fig.19b**).

In einem weiteren Schritt wird mittels eines chemisch-mechanischen Polierverfahrens (vgl. **Fig.19c**) das außerhalb der vorgefertigten Struktur 1901 sich befindende Elektrodenmaterial 1902, vorzugsweise Gold, entfernt.

Nach Beendigung des chemisch-mechanischen Polierverfahrens ist somit die erste Elektrode 901 bündig in die Isolatorschicht 903 eingebettet.

Elektrodenmaterial 1902 außerhalb, d.h. zwischen den weiteren zweiten Elektroden 902 bzw. zwischen den ersten Elektroden 901 ist restfrei entfernt.

Auf die erste Elektrode 901 kann ferner eine Deckschicht 1903 beispielsweise aus Siliziumnitrid aufgebracht werden mittels eines geeigneten Beschichtungsverfahrens wie beispielsweise einem CVD-Verfahren, einem Sputterverfahren oder einem Aufdampfverfahren (vgl. **Fig.19d**).

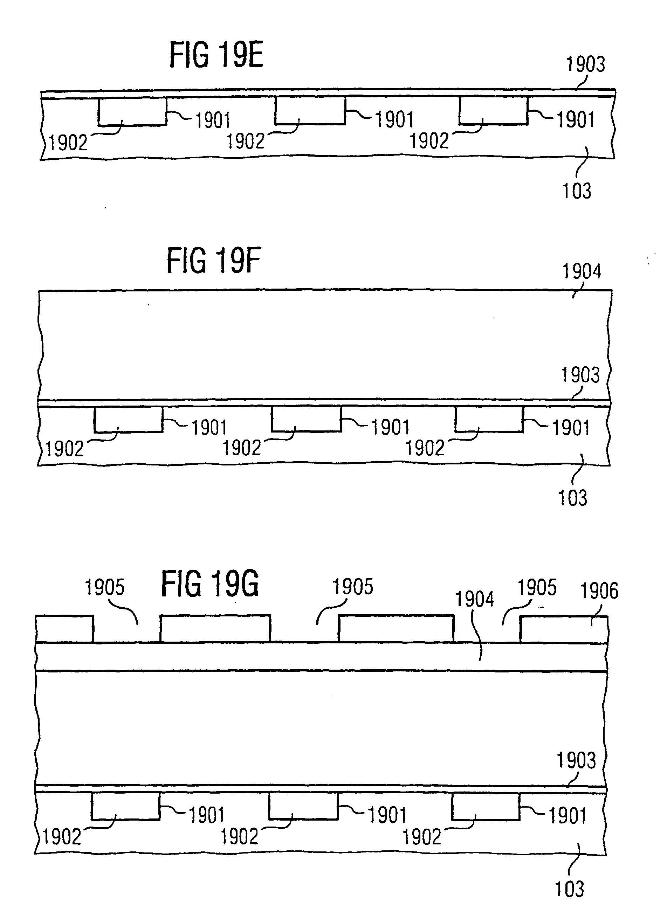

**Fig.19e** zeigt mehrere erste Elektroden 1901 aus Gold, die nebeneinander in die Isolatorschicht 903 eingebettet sind und die sich darauf befindende Deckschicht 1903.

In einem weiteren Schritt (vgl. **Fig.19f**) wird auf der Deckschicht 1903 eine zweite Elektrodenschicht 1904 aufgebracht.

Nach erfolgter Maskierung, in der die gewünschte Öffnung zwischen den zweiten Elektroden berücksichtigt ist, die aus der zweiten Elektrodenschicht 1904 gebildet werden soll, werden die gewünschten Öffnungen 1905 gebildet und mittels eines Trockenätzverfahrens in einen Downstream-Plasma wird die zweite Elektrodenschicht 1904 geätzt derart, dass der gewünschte Hohlraum 1704 gemäß der in **Fig.17** oder **Fig.18** dargestellten Biosensoren 1700, 1800 gebildet wird (vgl. **Fig.19g**).

Es ist in diesem Zusammenhang anzumerken, dass die Deckschicht 1903 nicht unbedingt erforderlich ist, jedoch vorteilhaft ist, um die ersten Elektroden 901 vor Anätzung bei der Bildung des Hohlraums 1704 zu schützen.

In einer alternativen Ausführungsform kann die T-förmige Struktur der zweiten Elektrode 902 gebildet, indem nach Bilden der ersten Elektrode 901 gemäß dem oben beschriebenen Verfahren eine weitere Isolatorschicht mittels eines CVD-Verfahrens oder eines anderen geeigneten Beschichtungsverfahrens auf die erste Isolatorschicht oder, bei Existenz der Deckschicht 1903 auf der Deckschicht 1903 gebildet wird. Anschließend werden in der Deckschicht 1903 entsprechende Gräben gebildet, die zur Aufnahme des ersten Schenkels 1701 der T-förmigen Struktur der zweiten Elektrode 902 dienen. Diese Gräben werden mit dem Elektrodenmaterial Gold gefüllt und gemäß dem Damascene-Verfahren wird mittels eines chemisch-mechanischen Polierens das Elektrodenmaterial entfernt, das sich in dem Graben und oberhalb der zweiten Isolatorschicht gebildet hat, bis auf eine vorgegebene Höhe, die der Höhe der zweiten Schenkel 1702 der T-förmigen zweiten Elektrode 902 entspricht.

Mittels Photolithographie wird die Öffnung 1705 zwischen den zweiten Elektroden 902 gebildet und anschließend wird das Isolatormaterial mittels eines Trockenätzverfahrens in einem Downstream-Plasma aus dem Volumen, das als Hohlraum 1704 ausgebildet werden soll, zumindest teilweise entfernt.

Weiterhin ist darauf hinzuweisen, dass die oben beschriebenen Ausführungsformen nicht auf eine Elektrode beschränkt ist, deren Haltebereich mittels Gold realisiert ist. Es können alternativ Elektroden aus Siliziummonoxid oder Siliziumdioxid, die mit Materialien in den Haltebereichen beschichtet sind. Diese Materialien - beispielsweise bekannte Alkoxysilanderivate - können Amin-, Hydroxyl-, Epoxy-, Acetoxy-, Isocyanatoder Succinimidylesterfunktionalitäten aufweisen, die eine kovalente Verbindung mit zu immobilisierenden Sondenmolekülen, in dieser Variante insbesondere Liganden, bilden können.

In diesem Dokument sind folgende Veröffentlichungen zitiert:

[1] R. Hintsche et al., Microbiosensors Using Electrodes Made in Si-Technology, Frontiers in Biosensorics, Fundamental Aspects, edited by F. W. Scheller et al., Dirk Hauser Verlag, Basel, S. 267 - 283, 1997

[2] M. Paeschke et al, Voltammetric Multichannel Measurements Using Silicon Fabricated Microelectrode Arrays, Electroanalysis, Vol. 7, Nr. 1, S. 1 - 8, 1996

[3] R. Hintsche et al, Microbiosensors using electrodes made in Si-technology, Frontiers in Biosensorics, Fundamental Aspects, edited by F. W. Scheller et al, Birkhauser Verlag, Basel, Schweiz, 1997

[4] P. van Gerwen, Nanoscaled Interdigitated Electrode Arrays for Biochemical Sensors, IEEE, International Conference on Solid-State Sensors and Actuators, Chicago, S.907 - 910, 16. - 19. Juni 1997

[5] WO 93/22678

[6] DE 19610115 A1

[7] C. Krause et al, Capacitive Detection of Surfactant Adsorption on Hydrophobized Gold Electrodes, Langmuir, Vol. 12, No. 25, S. 6059 - 6064, 1996

[8] V. Mirsky et al, Capacitive Monitoring of Protein Immobilization and Antigen-Antibody Reactions on Monomolecular Alkylthiol Films on Gold Electrodes, Biosensors & Bioelectronics, Vol. 12, No. 9 - 10, S. 977 - 989, 1997

**Patentansprüche**

1. Biosensor,

   - mit einer ersten Elektrode, die einen Haltebereich zum Halten von Sondenmolekülen aufweist, die makromolekulare Biopolymere binden können,
   - mit einer zweiten Elektrode,
   - bei dem die erste Elektrode und/oder die zweite Elektrode in eine Mehrzahl voneinander elektrisch isolierter Elektrodensegmente unterteilt ist/sind, mit Mitteln zur unabhängig voneinander elektrischen Kopplung beliebig ausgewählter Elektrodensegmente so dass eine effektive Elektrodenfläche in ihrer Größe abhängig von den ausgewählten Elektrodensegmenten einstellbar ist.

2. Biosensor nach Anspruch 1,
   mit elektrischen Schaltern, von denen jeweils ein Schalter mit einem zugeordneten Elektrodensegment gekoppelt ist derart, dass

   - in einer ersten Schalterposition das zugehörige Elektrodensegment ausgewählt ist und das Elektrodensegment mit einem Sammelanschluss elektrisch gekoppelt ist, und dass
   - in einer zweiten Schalterposition das zugehörige Elektrodensegment mit einem vorgegebenen elektrischen Potential gekoppelt ist und nicht ausgewählt ist.

**3.** Biosensor nach Anspruch 1 oder 2,
mit einer Messelektronik zum Messen eines von den ausgewählten Elektrodensegmenten zur Verfügung gestellten elektrischen Signals, wobei der Eingang der Messelektronik mit den ausgewählten Elektrodensegmenten elektrisch gekoppelt ist.

**4.** Biosensor nach Anspruch 3,
mit einer mit der Messelektronik gekoppelten Schaltersteuereinheit zum Steuern der Schalter, die derart eingerichtet ist, dass die Schalter abhängig von dem von der Messelektronik erfassten elektrischen Signal gesteuert werden können.

**5.** Biosensor nach einem der Ansprüche 1 bis 4,

- bei dem die zweite Elektrode in eine Mehrzahl voneinander elektrisch isolierter Elektrodensegmente unterteilt ist, wobei die Elektrodensegmente der zweiten Elektrode unabhängig voneinander auswählbar sind und elektrisch koppelbar sind, so dass die effektive Elektrodenfläche in ihrer Größe abhängig von den ausgewählten Elektrodensegmenten einstellbar ist, und
- bei dem ein nicht ausgewähltes Elektrodensegment mit einem vorgegebenen elektrischen Potential gekoppelt ist derart, dass ein Reduktions-/Oxidations-Recycling-Vorgang an den Elektroden erfolgen kann.

**6.** Biosensor nach einem der Ansprüche 1 bis 5,

- mit einer dritten Elektrode,
- wobei die zweite Elektrode und die dritte Elektrode unterschiedlich zu der ersten Elektrode und derart ausgestaltet sind, dass der Reduktions-/Oxidationsprozess im Rahmen eines Reduktions-/Oxidations-Recycling-Vorgangs an der zweiten Elektrode und an der dritten Elektrode erfolgt.

**7.** Biosensor nach einem der Ansprüche 1 bis 6,

- bei dem an die erste Elektrode ein erstes elektrisches Potential angelegt ist,
- bei dem an die zweite Elektrode ein zweites elektrisches Potential angelegt ist,
- bei dem an die dritte Elektrode ein drittes elektrisches Potential angelegt ist,
- wobei das dritte elektrische Potential derart gewählt wird, dass während des Reduktions-/Oxidations-Recycling-Vorgangs die Reduktion oder Oxidation nur an der zweiten Elektrode und an der dritten Elektrode erfolgt.

**8.** Biosensor nach Anspruch 7,

- bei dem das dritte elektrische Potential größer ist als das erste elektrische Potential, und
- bei dem das erste elektrische Potential größer ist als das zweite elektrische Potential.

**9.** Biosensor nach einem der Ansprüche 1 bis 8,
bei dem der Haltebereich der ersten Elektrode mit einem Material beschichtet ist, das Sondenmoleküle immobilisieren kann.

**10.** Biosensor nach einem der Ansprüche 1 bis 9,
bei dem der Haltebereich der ersten Elektrode zum Halten von Liganden ausgestaltet ist, mit denen Peptide oder Proteine gebunden werden können.

**11.** Biosensor nach einem der Ansprüche 1 bis 9,
bei dem der Haltebereich der ersten Elektrode zum Halten von DNA-Sondenmolekülen ausgestaltet ist, mit denen DNA-Moleküle gebunden werden können.

**12.** Biosensor nach einem der Ansprüche 1 bis 11,
bei dem der erste Haltebereich zumindest eines der folgenden Materialien aufweist:

- Hydroxylreste,
- Epoxidreste,
- Aminreste,
- Acetoxyreste,

- Isocyanatresce,
- Succinimidylesterreste,
- Thiolreste,
- Gold,
- Silber,
- Platin,
- Titan.

**13.** Biosensor nach einem der Ansprüche 6 bis 12,
bei dem die Elektroden in einer Interdigitalelektrodenanordnung angeordnet sind, wobei die dritte Elektrode jeweils zwischen der ersten Elektrode und der zweiten Elektrode angeordnet ist.

**14.** Biosensor nach einem der Ansprüche 6 bis 13,
bei dem die erste Elektrode und die zweite Elektrode und/oder die dritte Elektrode derart relativ zueinander angeordnet sind, dass sich zwischen der ersten Elektrode und der zweiten Elektrode und/oder der dritten Elektrode im wesentlichen ungekrümmte Feldlinien eines zwischen der ersten Elektrode und der zweiten Elektrode und/oder der dritten Elektrode erzeugten elektrischen Feldes ausbilden können.

**15.** Biosensor nach einem der Ansprüche 6 bis 13,

- einer Vielzahl erster Elektroden, die einen Haltebereich zum Halten von Sondenmolekülen aufweisen, die makromolekulare Biopolymere binden können,
- einer Vielzahl zweiter Elektroden,
- einer Vielzahl dritter Elektroden,
- wobei die Elektroden als Array angeordnet sind, und
- wobei die zweiten Elektroden und die dritten Elektroden derart ausgestaltet sind, dass der Reduktions/Oxidationsprozess im Rahmen eines Reduktions/Oxidations-Recycling-Vorgangs an den zweiten Elektroden und an den dritten Elektroden erfolgt.

**16.** Verfahren zum Ermitteln makromolekularer Biopolymere mit einem Biosensor, der aufweist:

- eine erste Elektrode, die einen Haltebereich zum Halten von Sondenmolekülen aufweist, die makromolekulare Biopolymere binden können,
- eine zweite Elektrode,
- bei dem die erste Elektrode und/oder die zweite Elektrode in eine Mehrzahl voneinander elektrisch isolierter Elektrodensegmente unterteilt ist/sind, wobei die Elektrodensegmente unabhängig voneinander auswählbar sind und elektrisch koppelbar sind, so dass eine effektive Elektrodenfläche abhängig von den ausgewählten Elektrodensegmenten einstellbar ist

a) bei dem eine zu untersuchende Lösung mit dem Biosensor in Kontakt gebracht wird, wobei die Lösung die zu erfassenden makromolekularen Biopolymere enthalten kann,
b) bei dem in der zu untersuchenden Lösung enthaltene makromolekulare Biopolymere an Sondenmoleküle auf der ersten Elektrode gebunden werden, wobei die gebundenen makromolekularen Biopolymere mit einem Enzym markiert sind,
c) bei dem der Biosensor mit einer Spüllösung gespült wird, so dass die zu untersuchende Lösung entfernt wird,
d) bei dem eine weitere Lösung mit durch das Enzym spaltbaren Molekülen mit dem Biosensor in Kontakt gebracht wird,
e) bei dem jeweils ein spaltbares Molekül in ein erstes Teilmolekül einer ersten Ladung und in ein zweites Teilmolekül einer zweiten Ladung aufgespaltet wird,
f) bei dem das erste Teilmolekül an einer der Elektroden oxidiert oder reduziert wird, wodurch ein Messstrom erzeugt wird, und
g) bei dem abhängig von dem Messstrom Elektrodensegmente der jeweiligen Elektrode ausgewählt werden und elektrisch gekoppelt werden, und
h) bei dem abhängig von dem Messstrom die makromolekularen Biopolymere ermittelt werden.

**Claims**

1. A biosensor,

   • having a first electrode, which has a holding region for holding probe molecules which can bind macromolecular biopolymers,
   • having a second electrode,
   • in which the first electrode and/or the second electrode is/are divided into a plurality of electrode segments which are electrically insulated from one another, with means for electrically coupling electrode segments, which are selected as desired, independently of one another, so that the size of an effective electrode face can be adjusted as a function of the electrode segments selected.

2. The biosensor as claimed in claim 1, having electrical switches, of which in each case one switch is coupled to an associated electrode segment in such a manner that

   • in a first switch position, the associated electrode segment is selected and the electrode segment is electrically coupled to a common connection, and that
   • in a second switch position, the associated electrode segment is coupled to a predetermined electrical potential and is not selected.

3. The biosensor as claimed in claim 1 or 2, having measurement electronics for measuring an electrical signal provided by the selected electrode segments, the input of the measurement electronics being electrically coupled to the selected electrode segments.

4. The biosensor as claimed in claim 3, having a switch control unit, which is coupled to the measurement electronics, for controlling the switches, which control unit is designed in such a manner that the switches can be controlled as a function of the electrical signal recorded by the measurement electronics.

5. The biosensor as claimed in one of claims 1 to 4,

   • in which the second electrode is divided into a plurality of electrode segments which are electrically insulated from one another, it being possible for the electrode segments for the second electrode to be selected and electrically coupled independently of one another, so that the size of the effective electrode face can be adjusted as a function of the electrode segments selected, and
   • in which an electrode segment which is not selected is coupled to a predetermined electrical potential, in such a manner that a reduction/oxidation recycling operation can take place at the electrodes.

6. The biosensor as claimed in one of claims 1 to 5,

   • having a third electrode,
   • the second electrode and the third electrode being designed differently than the first electrode and in such a manner that the reduction/oxidation process takes place as part of a reduction/oxidation recycling operation at the second electrode and at the third electrode.

7. The biosensor as claimed in one of claims 1 to 6,

   • in which a first electrical potential is applied to the first electrode,
   • in which a second electrical potential is applied to the second electrode,
   • in which a third electrical potential is applied to the third electrode,
   • in which the third electrical potential is selected in such a manner that during the reduction/oxidation recycling operation, the reduction or oxidation takes place only at the second electrode and at the third electrode.

8. The biosensor as claimed in claim 7,

   • in which the third electrical potential is greater than the first electrical potential, and
   • in which the first electrical potential is greater than the second electrical potential.

9. The biosensor as claimed in one of claims 1 to 8, in which the holding region of the first electrode is coated with

EP 1 272 842 B1

a material which can immobilize probe molecules.

10. The biosensor as claimed in one of claims 1 to 9, in which the holding region of the first electrode is designed to hold ligands to which peptides or proteins can be bound.

11. The biosensor as claimed in one of claims 1 to 9, in which the holding region of the first electrode is designed to hold DNA probe molecules to which DNA molecules can be bound.

12. The biosensor as claimed in one of claims 1 to 11, in which the first holding region includes at least one of the following materials:

- hydroxyl radicals,
- epoxy radicals,
- amine radicals,
- acetoxy radicals,
- isocyanate radicals,
- succinimidyl ester radicals,
- thiol radicals,
- gold,
- silver,
- platinum,
- titanium.

13. The biosensor as claimed in one of claims 6 to 12, in which the electrodes are arranged in an interdigitated electrode arrangement, the third electrode in each case being arranged between the first electrode and the second electrode.

14. The biosensor as claimed in one of claims 6 to 13, in which the first electrode and the second electrode and/or the third electrode are arranged in such a manner relative to one another that substantially uncurved field lines of an electric field which is generated between the first electrode and the second electrode and/or the third electrode can form between the first electrode and the second electrode and/or the third electrode.

15. The biosensor as claimed in one of claims 6 to 13, which has:

- a multiplicity of first electrodes which have a holding region for holding probe molecules which can bind macromolecular biopolymers,
- a multiplicity of second electrodes,
- a multiplicity of third electrodes,
- the electrodes being arranged as an array, and
- the second electrodes and the third electrodes being designed in such a manner that the reduction/oxidation process takes place as part of a reduction/oxidation recycling operation at the second electrodes and at the third electrodes.

16. A method for detecting macromolecular biopolymers using a biosensor which has:

- a first electrode, which has a holding region for holding probe molecules which can bind macromolecular biopolymers,
- a second electrode,
- in which the first electrode and/or the second electrode is/are divided into a plurality of electrode segments which are electrically insulated from one another, it being possible for the electrode segments to be selected and electrically coupled independently of one another, so that an effective electrode face can be adjusted as a function of the electrode segments selected,

  a) in which method a solution which is to be analyzed is brought into contact with the biosensor, it being possible for the solution to contain the macromolecular biopolymers which are to be recorded,
  b) in which method macromolecular biopolymers which are present in the solution which is to be analyzed are bound to probe molecules on the first electrode, the bound macromolecular biopolymers being marked with an enzyme,
  c) in which method the biosensor is rinsed with a rinsing solution, so that the solution which is to be

22

analyzed is removed,

d) in which method a further solution containing molecules which can be cleaved by the enzyme is brought into contact with the biosensor,

e) in which method in each case one cleavable molecule is cleaved into a first part-molecule having a first charge and a second part-molecule having a second charge,

f) in which method the first part-molecule is oxidized or reduced at one of the electrodes, with the result that a measurement current is generated, and

g) in which method electrode segments of the respective electrode are selected and electrically coupled as a function of the measurement current, and

h) in which method the macromolecular biopolymers are detected as a function of the measurement current.

**Revendications**

1. Biodétecteur

   • comportant une première électrode, qui possède une zone de retenue pour retenir des molécules de sonde, qui peuvent fixer des biopolymères macromoléculaires,
   • comportant une seconde électrode,
   • dans lequel la première électrode et/ou la seconde électrode est/sont divisée(s) en une multiplicité de segments d'électrodes isolés électriquement les uns des autres, comportant des moyens pour réaliser le couplage électrique, indépendamment les uns des autres, de segments d'électrodes sélectionnés d'une manière quelconque, de sorte que l'étendue de la surface effective d'électrode est réglable en fonction des segments d'électrodes sélectionnés.

2. Biodétecteur selon la revendication 1, comportant des commutateurs électriques, parmi lesquels respectivement un commutateur est couplé au segment associé d'électrode de telle sorte que :

   • dans une première position du commutateur, le segment associé d'électrode est sélectionné et le segment d'électrode est couplé électriquement à une borne de collecte, et que
   • dans une seconde position du commutateur, le segment associé à l'électrode est couplé à un potentiel électrique prédéterminé et n'est pas sélectionné.

3. Biodétecteur selon la revendication 1 ou 2, comprenant un système électronique de mesure pour mesurer un signal électrique, qui est délivré par les segments sélectionnés d'électrodes, l'entrée du système électronique de mesure étant couplée électriquement aux segments sélectionnés d'électrodes.

4. Biodétecteur selon la revendication 3, comportant une unité de commande des commutateurs, qui est couplée à l'unité électronique de mesure et sert à commander les commutateurs et qui est agencée de telle sorte que les commutateurs peuvent être commandés en fonction du signal électrique qui est détecté par l'unité électronique de mesure.

5. Biodétecteur selon l'une des revendications 1 à 4,

   • dans lequel la seconde électrode est divisée en une multiplicité de segments d'électrode isolés électriquement les uns des autres, les segments de la seconde électrode pouvant être sélectionnés et couplés électriquement indépendamment les uns des autres de sorte que l'étendue de la surface effective de l'électrode peut être réglée en fonction des segments sélectionnés d'électrode, et
   • dans lequel un segment non sélectionné d'électrode est couplé à un potentiel électrique prédéterminé de telle sorte qu'un processus de recyclage de réduction / d'oxydation peut s'effectuer au niveau des électrodes.

6. Biodétecteur selon l'une des revendications 1 à 5,

   • comportant une troisième électrode,
   • la seconde électrode et la troisième électrode étant agencées différemment de la première électrode et de telle sorte que le processus de réduction / d'oxydation s'effectue dans le cadre d'un processus de recyclage de réduction / d'oxydation au niveau de la seconde électrode et de la troisième électrodes.

**7.** Biodétecteur selon l'une des revendications 1 à 6,

- dans lequel un premier potentiel électrique est appliqué à la première électrode,
- dans lequel un second potentiel électrique est appliqué à la seconde électrode,
- dans lequel un troisième potentiel électrique est appliqué à la troisième électrode,
- le troisième potentiel électrique étant choisi de telle sorte que pendant le processus de recyclage de réduction / d'oxydation, la réduction et l'oxydation s'effectuent uniquement au niveau de la seconde électrode et de la troisième électrode.

**8.** Biodétecteur selon la revendication 7,

- dans lequel le troisième potentiel électrique est supérieur au premier potentiel électrique, et
- dans lequel le premier potentiel électrique est supérieur au second potentiel électrique.

**9.** Biodétecteur selon l'une des revendications 1 à 8,
dans lequel la zone de retenue de la première électrode est recouverte d'un matériau, qui peut immobiliser des molécules de sonde.

**10.** Biodétecteur selon l'une des revendications 1 à 9,
dans lequel la zone de retenue de la première électrode conçue pour retenir des ligandes, auxquels peuvent être fixés des peptides ou des protéines.

**11.** Biodétecteur selon l'une des revendications 1 à 9,
dans lequel la zone de retenue de la première électrode est agencée de manière à retenir des molécules de sonde d'ADN, auxquelles peuvent être fixées des molécules d'ADN.

**12.** Biodétecteur selon l'une des revendications 1 à 11,
dans lequel la première zone de retenue comporte au moins l'un des matériaux suivants :

- restes d'hydroxyle,
- restes d'époxy,
- restes d'amine,
- restes d'acétoxy,
- restes d'isocyanate,
- restes de succinimidylester,
- restes de thiol
- or,
- argent,
- platine,
- titane.

**13.** Biodétecteur selon l'une des revendications 6 à 12,
dans lequel les électrodes sont disposées selon une disposition d'électrodes interdigitées, la troisième électrode étant disposée respectivement entre la première électrode et la seconde électrode.

**14.** Biodétecteur selon l'une des revendications 6 à 13,
dans lequel la première électrode et la seconde électrode et/ou la troisième électrode sont disposées les unes par rapport aux autres de telle sorte qu'entre la première électrode et la seconde électrode et/ou la troisième électrode il peut se former des lignes de champ essentiellement non courbées d'un champ électrique produit entre la première électrode et la seconde électrode et/ou la troisième électrode.

**15.** Biodétecteur selon l'une des revendications 6 à 13, comportant

- une multiplicité de premières électrodes, qui comportent une zone de retenue pour retenir des molécules de sonde, qui peuvent fixer des biopolymères macromoléculaires,
- une multiplicité de secondes électrodes,
- une multiplicité de troisièmes électrodes,
- les électrodes étant disposées sous la forme d'un réseau, et

- les secondes électrodes et les troisièmes électrodes étant agencées de telle sorte que le processus de réduction / d'oxydation s'effectue dans le cadre d'un procédé de recyclage de réduction / d'oxydation au niveau des secondes électrodes et au niveau des troisièmes électrodes.

**16.** Procédé pour déterminer des biopolymères macromoléculaires comportant un biodétecteur, qui comporte :

- une première électrode, qui possède une zone de retenue servant à retenir des molécules de sonde, qui peuvent fixer des biopolymères macromoléculaires,
- une seconde électrode,
- selon lequel la première électrode et/ou la seconde électrode est/sont divisée(s) en une multiplicité de segments d'électrode isolés électriquement les uns des autres, les segments d'électrodes pouvant être sélectionnés indépendamment les uns des autres et pouvant être couplés électriquement de sorte qu'une surface effective d'électrode est réglable indépendamment des segments d'électrode sélectionnés,

a) selon lequel une solution à examiner peut être amenée en contact avec le biodétecteur, la solution pouvant contenir les biopolymères macromoléculaires à détecter,

b) selon lequel les biopolymères macromoléculaires contenus dans la solution à examiner sur des molécules de sonde sont fixés à la première électrode, les biopolymères macromoléculaires fixés étant marqués par un enzyme,

c) selon lequel le biodétecteur est lavé au moyen d'une solution de lavage de sorte que la solution à examiner est éliminée,

d) selon lequel une autre solution comportant des molécules pouvant être divisées par l'enzyme, est amenée en contact avec le biodétecteur,

e) selon lequel respectivement une molécule pouvant être divisée est divisée en une première molécule partielle possédant une première charge et en une seconde molécule partielle possédant une seconde charge,

f) selon lequel la première molécule partielle est oxydée ou réduite sur l'une des électrodes, ce qui produit un courant de mesure, et

g) selon lequel des segments de l'électrode respective sont sélectionnés et couplés électriquement en fonction du courant de mesure, et

h) selon lequel les biopolymères macromoléculaires sont déterminés en fonction du courant de mesure.

# FIG 1A

100 — 106
108
105
101 — 104
103
102 — 107

# FIG 1B

110
117
111 — 114
118
112 — 115
113
119
116
120

# FIG 1C

132
134 — 135
130
136
131
137
133

## FIG 2A

## FIG 2B

## FIG 3

## FIG 4A

## FIG 4B

## FIG 4C

## FIG 5

## FIG 6A

601  603  602

## FIG 6B

607

EP 1 272 842 B1

# FIG 7

31

EP 1 272 842 B1

## FIG 8A

## FIG 8B

# FIG 9

# FIG 10

EP 1 272 842 B1

FIG 11A

1105  1102  1106                                        1101

1103

1100

FIG 11B

1107

1104

FIG 11C

1108

FIG 11D   1109

1112                1111                    1111

1110                                                    1110

FIG 12A

FIG 12B

FIG 12C

FIG 13A

1304

1305    1306

1303

1301

1302

FIG 13B

1306

1307    1308

1301

1309

1302

FIG 13C

1310

1306    1307

1301

1308

1302

## FIG 14A

## FIG 14B

## FIG 14C

## FIG 15

## FIG 16

FIG 17

FIG 18

EP 1 272 842 B1

FIG 19A

103

1901

FIG 19B

1902

103

1901

FIG 19C

1902

1901

103

FIG 19D

1903

1901

103

## FIG 19E

## FIG 19F

## FIG 19G